(19) **Europäisches Patentamt / European Patent Office / Office européen des brevets**

(11) **EP 4 318 779 A1**

(12) # EUROPEAN PATENT APPLICATION
published in accordance with Art. 153(4) EPC

(43) Date of publication:
**07.02.2024   Bulletin 2024/06**

(21) Application number: **23773622.8**

(22) Date of filing: **09.03.2023**

(51) International Patent Classification (IPC):
**H01M 50/451** [(2021.01)]

(52) Cooperative Patent Classification (CPC):
**H01M 50/409; H01M 50/446; H01M 50/451;
H01M 50/40; Y02E 60/10**

(86) International application number:
**PCT/CN2023/080602**

(87) International publication number:
**WO 2023/179373 (28.09.2023 Gazette 2023/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 25.03.2022  PCT/CN2022/083171
30.12.2022  PCT/CN2022/144349

(71) Applicant: **Contemporary Amperex Technology
Co., Limited
Ningde, Fujian 352100 (CN)**

(72) Inventors:
• **MA, Yanyun**
  **Ningde, Fujian 352100 (CN)**
• **HONG, Haiyi**
  **Ningde, Fujian 352100 (CN)**

• **CHENG, Xiaonan**
  **Ningde, Fujian 352100 (CN)**
• **WANG, Peng**
  **Ningde, Fujian 352100 (CN)**
• **CHAO, Lei**
  **Ningde, Fujian 352100 (CN)**
• **YANG, Jianrui**
  **Ningde, Fujian 352100 (CN)**
• **ZHENG, Yi**
  **Ningde, Fujian 352100 (CN)**
• **SUN, Chengdong**
  **Ningde, Fujian 352100 (CN)**

(74) Representative: **Jacob, Reuben Ellis et al
Maucher Jenkins
Seventh Floor Offices
Artillery House
11-19 Artillery Row
London SW1P 1RT (GB)**

(54) **SEPARATOR AND MANUFACTURING METHOD THEREFOR, BATTERY, AND ELECTRIC DEVICE**

(57)   Disclosed in the present application are a separator and a manufacturing method therefor, a battery, and an electric device. A coating is formed on at least part of a surface of a substrate; the coating comprises composite particles, first inorganic particles and an adhesive; the composite particles form protrusions on the surface of the coating; the composite particles comprise polyacrylate particles and ion-conducting particles; the ion-conducting particles are arranged between at least two of the polyacrylate particles, wherein a mass ratio of the first inorganic particles to the ion-conducting particles is 1:0.007-0.06.

FIG. 1

EP 4 318 779 A1

**Description**

**TECHNICAL FIELD**

This application pertains to the technical field of secondary batteries, and specifically relates to a separator and a manufacturing method therefor, a battery, and and electric device.

**BACKGROUND**

Secondary batteries have been widely used in various consumer electronic products and electric vehicles due to their prominent advantages of light weight, no pollution, and no memory effect.

With continuous development of the new energy industry, customers impose higher use requirements for secondary batteries. For example, the energy density of the secondary batteries is designed to be increasingly high; however, the increased energy density of the battery generally does not help balance the electrochemical performance and safety performance.

Therefore, how the cycling performance and safety performance of batteries are balanced is a key challenge in the field of battery design.

**SUMMARY**

In view of the technical problems in the background, this application provides a separator, so as to enable a battery containing the separator to achieve both good cycling performance and safety performance.

In order to achieve the above objective, a first aspect of this application provides a separator including a substrate and a coating, where the coating is formed on at least part of a surface of the substrate, and the coating includes composite particles, first inorganic particles, and a binder, the composite particles form bulges on a surface of the coating, the composite particles include polyacrylate particles and ion-conducting particles, and the ion-conducting particle is present between at least two of the polyacrylate particles. A mass ratio of the first inorganic particles to the ion-conducting particles is 1:0.007-0.06.

Compared with the prior art, this application includes at least the following beneficial effects: the composite particles including polyacrylate particles and ion-conducting particles are used in the separator, and the ion-conducting particle is present between at least two polyacrylate particles, thereby avoiding adhesion of the composite particles during high-temperature granulation. This improves ionic conductivity of the separator, and improves compressive modulus of the composite particles, implementing more appropriate adhesion between the separator and the electrode plate. Compared with use of polyvinylidene fluoride particles in separators in the prior art, the coating of the separator in this application includes the composite particles, the first inorganic particles, and the binder, which reduces resistance of the separator and implements more appropriate adhesion force between the separator and the electrode plate during production and use of a cell. Most importantly, this makes the separator have appropriate compressive modulus, which ensures that lithium ion transport channels are not blocked when the cell experiences an increasing swelling force during cycling to prevent degradation of kinetic performance, thereby improving the kinetic performance of the battery. Also, the first inorganic particles in the coating of the separator can improve high-temperature resistance of the separator, the mass ratio of the first inorganic particles to the ion-conducting particles is 1:0.007-0.06, and the first inorganic particles and the ion-conducting particles in the composite particles can form a through connection path. The connection path helps transport of lithium ions in an electrolyte, thereby improving ionic conductivity of the separator. In addition, when high temperature is generated due to thermal runaway of the battery, the bulges formed by the composite particles on the surface of the coating can form a large-area film structure to reduce or block the ion transport channels and delay thermal spread of the battery, thereby effectively improving the cycling performance and high-temperature safety performance of the battery.

In some embodiments of this application, based on mass of the coating, a percentage of the first inorganic particles is 50%-70%, preferably 55%-65%. Therefore, on the one hand, the high-temperature resistance of the separator can be improved, and on the other hand, this helps form a through connection path between the ion-conducting particles in the composite particles and the first inorganic particles, thereby improving the ionic conductivity of the separator.

In some embodiments of this application, based on the mass of the coating, a percentage of the ion-conducting particles is 0.5%-3%, preferably 0.6%-1.2%. Therefore, the ionic conductivity of the separator can be improved.

In some embodiments of this application, a dielectric constant of the ion-conducting particles is not less than 5, preferably not less than 10. Therefore, the ionic conductivity of the separator can be improved.

In some embodiments of this application, the ion-conducting particles include at least one of second inorganic particles and organic-inorganic hybrid composite particles. Therefore, the ionic conductivity of the separator can be improved.

In some embodiments of this application, the second inorganic particles include at least one of $BaTiO_3$, $Pb(Zr,Ti)O_3(PZT)$, $Pb_{1-x}La_xZr_{1-y}Ti_yO_3(PLZT)$, $PB(Mg_3Nb_{2/3})O_3-PbTiO_3(PMN-PT)$, $HfO_2$, $SrTiO_3$, $SnO_2$, $CeO_2$, $MgO$, $NiO$, $CaO$, $ZnO$, $ZrO_2$, $Y_2O_3$, $Al_2O_3$, $TiO_2$, $SiC$, $AlO(OH)$, $Al_2O_3 \cdot H_2O$, $Li_3PO_4$, $Li_xTi_y(PO_4)_3$, $\gamma$-$AlOOH$, $BaSO_4$, $Mg(OH)_2$, $SiO_2$, $SrTiO_3$, $BaTiO_3$, and $MgF_2$. Therefore, the ionic conductivity of the separator can be improved.

In some embodiments of this application, the composite particles include ion-conducting particles of primary particle morphology.

In some embodiments of this application, a ratio of $D_v50$ of the first inorganic particles to $D_v50$ of the ion-conducting particles of the primary particle morphology is 0.5-200:1, preferably 1-4:1. Therefore, the ionic conductivity of the separator can be improved.

In some embodiments of this application, $D_v50$ of the first inorganic particles is 0.5$\mu$m-2$\mu$m, preferably 1$\mu$m-2$\mu$m. Therefore, the ionic conductivity of the separator can be improved.

In some embodiments of this application, a mass ratio of the composite particles to the first inorganic particles is (5-30):(50-70). Therefore, the kinetic performance of the battery can be improved.

In some embodiments of this application, $D_v50$ of the composite particles is greater than $D_v50$ of the first inorganic particles. This helps form a bulge structure on the surface of the coating of the separator, thereby improving the kinetic performance of the cell.

In some embodiments of this application, $D_v50$ of the composite particles is $\geq 2.5\mu$m, preferably 2.5$\mu$m-10$\mu$m, more preferably 3$\mu$m-8$\mu$m. This helps form a bulge structure on the surface of the coating, thereby improving the kinetic performance of the cell.

In some embodiments of this application, the composite particles include a first agglomerate, and the first agglomerate includes at least two ion-conducting particles. Therefore, the kinetic performance of the battery can be improved.

In some embodiments of this application, $0.01\mu$m $\leq D_v50$ of the first agglomerate $\leq D_v10$ of the composite particles. Therefore, the compressive modulus of the separator can be increased.

In some embodiments of this application, $D_v50$ of the ion-conducting particles of the primary particle morphology is 0.01$\mu$m-1$\mu$m, preferably 0.5$\mu$m-1$\mu$m. Therefore, it can be ensured that the composite particles are not fused during preparation to block the ion transport channels of the separator.

In some embodiments of this application, the composite particles include a second agglomerate, and the second agglomerate includes at least two polyacrylate particles.

In some embodiments of this application, $D_v50$ of the second agglomerate is 0.3$\mu$m-5$\mu$m, preferably 1$\mu$m-2$\mu$m.

In some embodiments of this application, the polyacrylate particles include polyacrylate particles of primary particle morphology and/or polyacrylate particles of secondary particle morphology.

In some embodiments of this application, $D_v50$ of the polyacrylate particles of primary particle morphology is 50nm-400nm, preferably 100nm-200nm. Therefore, overall ionic conductivity of the coating of the separator can be improved, the resistance of the separator can be reduced, and the kinetic performance of the cell can be improved.

In some embodiments of this application, $D_v50$ of the polyacrylate particles of secondary particle morphology is 2$\mu$m-15$\mu$m, preferably 5$\mu$m-8$\mu$m. Therefore, a buffer space can be provided for stress release between the electrode plates, preventing corners of a wound cell from breaking due to stress accumulation.

In some embodiments of this application, a percentage of the ion-conducting particles in the composite particles is 1wt%-50wt%, optionally 1wt%-40wt%, more optionally 2wt%-15wt%. Therefore, the separator obtains appropriate compressive modulus.

In some embodiments of this application, two-side height of the bulges is 15$\mu$m-60$\mu$m. Therefore, the safety performance of the battery can be improved and the kinetic performance of the cell can be also improved.

In some embodiments of this application, the first agglomerate is present on a surface of the bulge. Therefore, the kinetic performance of the battery can be improved.

In some embodiments of this application, the binder includes a linear copolymer with hydroxyl group and carboxylate. This helps form a through bridge between the first inorganic particles and the ion-conducting particles in the composite particles, thereby improving the ionic conductivity of the separator.

In some embodiments of this application, the binder includes a linear copolymer with hydroxyl group, carboxylate, amide group, and epoxy group. This helps form a through bridge between the first inorganic particles and the ion-conducting particles in the composite particles, thereby improving the ionic conductivity of the separator.

In some embodiments of this application, the linear copolymer includes a polymerization product of the following types of monomers:

(1) first-type monomer, where the first-type monomer includes at least one of acrylic acid, methacrylic acid, methyl methacrylate, tert-butyl methacrylate, isobornyl methacrylate, methylol acrylamide, acrylamide, styrene, and acrylonitrile;

(2) second-type monomer, where the second-type monomer includes at least one of ethyl acrylate, n-butyl acrylate, isobutyl acrylate, tert-butyl acrylate, 2-ethylhexyl acrylate, n-octyl acrylate, decyl acrylate, cyclohexyl acrylate, ethyl methacrylate, n-butyl methacrylate, isobutyl methacrylate, 2-ethylhexyl methacrylate, lauryl methacrylate, n-hexyl methacrylate, tridecyl methacrylate, octadecyl methacrylate, cyclohexyl methacrylate, benzyl methacrylate, ethyleneurea ethyl methacrylate, dicyclopentene ethoxy methacrylate, tetrahydrofuryl methacrylate, trifluoroethyl methacrylate, ethylene urea ethyl methacrylate, propylene methacrylate, dicyclopentene ethoxy methacrylate, tetrahydrofuryl methacrylate, and trifluoroethyl acrylate;

(3) third-type monomer, where the third-type monomer includes at least one of 2-hydroxyethyl acrylate, 2-hydroxypropyl acrylate, methacrylate-2-hydroxyethyl ester, 2-hydroxypropyl methacrylate, glycidyl acrylate, glycidyl methacrylate, dimethylaminoethyl methacrylate, diethylaminoethyl methacrylate, vinyltrimethoxysilane, vinyltriethoxysilane, vinyl Triisopropoxysilane, $\gamma$-methacryloxypropyltrimethoxysilane, N-methylolacrylamide, N-butoxymethyl(meth)acrylamide, diacetoneacrylamide, ethyl methacrylate acetoacetate, divinylbenzene, and epoxy resin with an epoxy value of 0.35-0.50; and

(4) fourth-type monomer, where the fourth-type monomer includes at least one of polyvinyl alcohol, polypropylene alcohol, polypropylene glycol, polyethylene glycol, and polyvinyl acid alcohol.

In this way, the linear copolymer with the above monomers enables the binder to have good wettability on the substrate, thereby improving good coating rate of the substrate and also improving compactness of the coating. More importantly, this increases adhesion of the first inorganic particles and composite particles to the substrate and greatly improves thermal shrinkage performance of the separator, thereby improving the safety performance of the cell. Also, this implements chemical action with the particle materials in the coating to form a moderately compact structure, further improving the safety performance of the separator. In addition, such three-dimensional interaction opens up lithium ion transport channels, improving the ionic conductivity of the separator and improving the kinetic performance of the cell.

In some embodiments of this application, a mass ratio of the composite particles to the binder is (80-90):(5-20), preferably (85-90):(8-15). Therefore, the cycling performance and safety performance of the battery can be improved.

In some embodiments of this application, the coating further includes organic particles, the organic particles include at least one of polytetrafluoroethylene particles, polychlorotrifluoroethylene particles, polyvinyl fluoride particles, polyvinylidene fluoride particles, polyethylene particles, polypropylene particles, polyacrylonitrile particles, polyethylene oxide particles, copolymer particles of fluorine-containing alkenyl monomer units and vinyl monomer units, copolymer particles of fluorine-containing alkenyl monomer units and acrylate monomer units, copolymer particles of fluorine-containing alkenyl monomer units and acrylic monomer units, and modified compound particles of the homopolymers or copolymers; and the organic particles and the composite particles form bulges on the surface of the coating. Therefore, the cycling performance and safety performance of the battery can be improved.

In some embodiments of this application, the organic particles form third agglomerate.

In some embodiments of this application, $D_v50$ of the third agglomerate is $5\mu m$-$30\mu m$, preferably $5\mu m$-$12\mu m$.

In some embodiments of this application, the third agglomerate includes organic particles of primary particle morphology, and a gap is present between two adjacent organic particles. Therefore, the ionic conductivity of the separator can be improved.

In some embodiments of this application, $D_v50$ of the organic particles of primary particle morphology is 50nm-400nm, preferably 100nm-200nm.

In some embodiments of this application, a mass ratio of the composite particles to the organic particles is (20-90):(0-70), preferably (45-90):(0-45). Therefore, costs of the battery can be reduced, and the safety performance and cycling performance of the battery can be improved.

A second aspect of this application provides a preparation method for separator, including the following steps: (1) providing a substrate; and (2) forming a coating on at least part of a surface of the substrate, where the coating includes composite particles, first inorganic particles, and a binder, the composite particles form bulges on a surface of the coating, the composite particles include polyacrylate particles and ion-conducting particles, and the ion-conducting particle is present between at least two of the polyacrylate particles; where a mass ratio of the first inorganic particles to the ion-conducting particles is 1:0.007-0.06.

Therefore, the separator has excellent ionic conductivity and compressive modulus, and appropriate adhesion is present between the separator and the electrode plate, improving the cycling performance of the battery and also improving the safety performance of the battery.

A third aspect of this application provides a battery, including the separator according to the first aspect of this application or a separator prepared by using the method according to the second aspect of this application. The battery of this application includes the separator provided above in this application or the separator prepared by using the above method, thereby having excellent safety performance and cycling performance.

A fourth aspect of this application provides an electric apparatus, including the battery according to the third aspect of this application, where the battery is configured to supply electrical energy. The electric apparatus in this application includes the battery provided above in this application, and therefore has at least the same advantages as the battery.

## BRIEF DESCRIPTION OF DRAWINGS

To describe the technical solutions in this application more clearly, the following briefly describes the accompanying drawings used in this application. Apparently, the accompanying drawings in the following description show only some embodiments of this application, and a person of ordinary skill in the art may still derive other drawings from these accompanying drawings without creative efforts.

FIG. 1 is a structural model diagram of a separator according to an embodiment of this application.
FIG. 2 is a SEM diagram of a separator according to another embodiment of this application.
FIG. 3 is a schematic diagram of winding a cell with a separator, a positive electrode plate, and a negative electrode plate stacked according to an embodiment of this application.
FIG. 4 is a structural model diagram of a separator according to another embodiment of this application.
FIG. 5 is a schematic structural diagram of a battery according to an embodiment of this application.
FIG. 6 is a schematic structural diagram of a battery module according to an embodiment of this application.
FIG. 7 is a schematic structural diagram of a battery pack according to an embodiment of this application.
FIG. 8 is an exploded view of FIG. 7.
FIG. 9 is a schematic diagram of an embodiment of an electric apparatus using a battery as a power source.

Reference signs are described as follows:
1: secondary battery; 2: battery module; 3: battery pack; 4: upper box body; 5: lower box body.

## DETAILED DESCRIPTION OF EMBODIMENTS

The following further describes this application with reference to embodiments. It should be understood that these specific embodiments are merely intended to illustrate this application but not to limit the scope of this application.

For brevity, this specification specifically discloses only some numerical ranges. However, any lower limit may be combined with any upper limit to form an unspecified range, and any lower limit may be combined with another lower limit to form an unspecified range, and likewise, any upper limit may be combined with any other upper limit to form an unspecified range. In addition, each individually disclosed point or single numerical value, as a lower limit or an upper limit, may be combined with any other point or single numerical value or combined with another lower limit or upper limit to form an unspecified range.

In the description of this specification, unless otherwise stated, a term "or (or)" indicates inclusion. That is, a phrase "A or (or) B" means "A, B, or both A and B". More specifically, any one of the following conditions satisfies the condition "A or B": A is true (or present) and B is false (or not present); A is false (or not present) and B is true (or present); or both A and B are true (or present).

In the descriptions of this specification, it should be noted that "more than" or "less than" is inclusive of the present number and that "more" in "one or more" means two or more than two, unless otherwise specified.

Unless otherwise specified, terms used in this application have common meanings generally understood by persons skilled in the art. Unless otherwise specified, numerical values of parameters mentioned in this application may be measured by using various measurement methods commonly used in the art (for example, testing may be performed by using a method provided in the embodiments of this application).

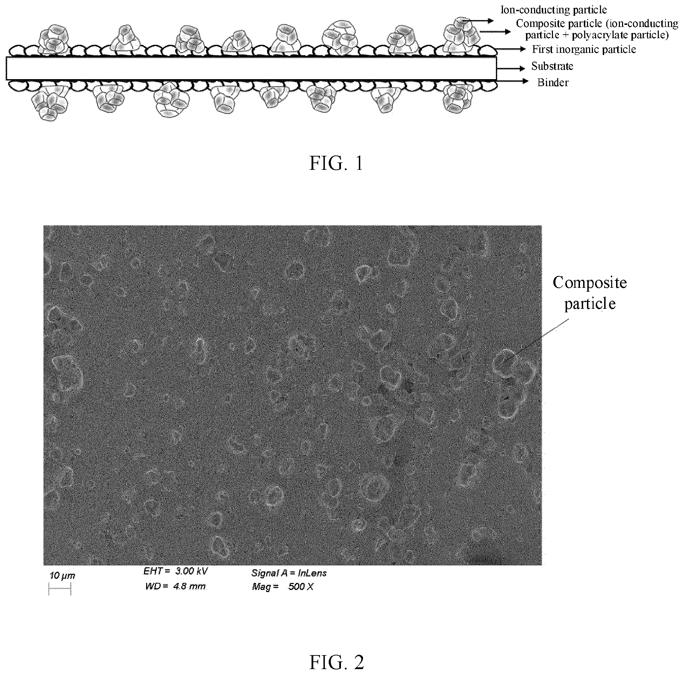

An embodiment of this application provides a separator. Refer to FIG. 1. The separator includes a substrate and a coating, where the coating is formed on at least part of a surface of the substrate, and the coating includes composite particles, first inorganic particles, and a binder, the composite particles form bulges on a surface of the coating, the composite particles include polyacrylate particles and ion-conducting particles, and the ion-conducting particle is present between at least two of the polyacrylate particles. A mass ratio of the first inorganic particles to the ion-conducting particles is 1:0.007-0.06.

It should be noted that "the coating is formed on at least part of the surface of the substrate" should be construed as the coating being in direct contact with the surface of the substrate, which is referred to as "direct contact"; or another layer being present between the surface of the substrate and the coating, which is referred to as "indirect contact". In addition, For "the ion-conducting particle being present between at least two of the polyacrylate particles, and the composite particles forming bulges on a surface of the coating", the separator may be cut along its thickness direction, and then the section of the coating of the separator is scanned using a scanning electron microscope (SEM). From the SEM image, it can be seen that the composite particles include polyacrylate particles and ion-conducting particles, the ion-conducting particle is present between some of polyacrylate particles, and the composite particles form bulges on the surface of the coating.

Specifically, the ZEISS Sigma300 scanning electron microscope is used for testing. Testing is conducted according to the following steps: first cut a separator under test into 6mm×6mm samples for testing, and clamp the sample for testing with two electrically-conductive and thermally-conductive copper foils; attach the sample being tested to the copper foil using a double-sided tape, press it with a 400g flat iron block for 1 hour to make the gap between the sample being tested and the copper foil as small as possible, and cut edges with scissors; and attach it to a sample stage using a conductive adhesive such that the sample slightly protrudes from an edge of the sample stage. Then, load the sample stage into a sample holder and lock the sample stage in place, power on an IB-19500CP argon ion beam cross-section polisher and evacuate the polisher until 10Pa-4Pa, set argon flow to 0.15 MPa, voltage to 8KV, and polishing time to 2 hours, adjust the sample stage to rocking mode to start polishing, and after polishing is completed, use a ZEISS Sigma 300 scanning electron microscope to obtain the ion beam cross-section polisher (CP) image of the sample being tested.

With an intention not to be limited by any theory, the inventors have first found through extensive researches that the coating of the separator in this application includes the composite particles, first inorganic particles and a binder, and the composite particles and the first inorganic particles are bonded to the substrate through the binder, the composite particles include polyacrylate particles and ion-conducting particles, and an ion-conducting particle is present between at least two of the polyacrylate particles in the composite particles. On the one hand, presence of the ion-conducting particles in the composite particles avoids binding of the polyacrylate particles caused by high-temperature treatment during granulation; use of the bound polyacrylate particles in the coating of the separator may cause ion transport to be hindered, thereby reducing the ionic conductivity of the separator; on the other hand, due to relatively low compressive modulus of the polyacrylate particles, the polyacrylate particles being used alone in the coating of the separator is prone to block pores of the separator and even the surface of the positive electrode under pressure, thereby reducing ion conduction and decreasing the kinetic performance of the battery. With ion-conducting particles arranged between the polyacrylate particles, the compressive modulus can be increased to ensure that the kinetic performance of the separator and the positive electrode is not affected by the composite particles, thereby improving the kinetic performance of the battery. Also, the first inorganic particles in the coating of the separator can improve high-temperature resistance of the separator, the mass ratio of the first inorganic particles to the ion-conducting particles is 1:0.007-0.06, and the first inorganic particles and the ion-conducting particles in the composite particles can form a through connection path. The connection path helps transport of lithium ions in an electrolyte, thereby improving ionic conductivity of the separator. In addition, the composite particles form bulges on the surface of the coating, and the separator comes into contact with the electrode plate through the bulges. On the one hand, during the winding process, the bulges provide an appropriate space to release the stress, preventing the electrode plate from breaking and improving the safety performance; on the other hand, a gap is present between the separator and the electrode plate to facilitate flow and infiltration of the electrolyte and improve the kinetic performance of the cell. Under joint action of the above conditions, adhesion force is present between the separator and the electrode plate, thereby improving the kinetic performance of the battery. Also, when the battery is working at high temperature, the bulges can form a large-area film structure to reduce or block the ion transport channels and delay thermal spread of the battery, thereby effectively improving the cycling performance and high-temperature safety performance of the battery.

The inventors have found through in-depth research that when the separator in this application satisfies the foregoing conditions, the performance of the battery can be further improved if one or more of the following conditions are also satisfied optionally.

In some embodiments, the mass ratio of the first inorganic particles to the ion-conducting particles is 1:0.007-0.06, for example, 1:0.008-0.06, 1:0.009-0.06, 1:0.01-0.06, 1:0.011-0.06, 1:0.013-0.06, 1:0.015-0.06, 1:0.017-0.06, 1:0.02-0.06, 1:0.025-0.06, 1:0.03-0.06, 1:0.035-0.06, 1:0.04- 0.06, 1:0.045-0.06, 1:0.05-0.06, or 1:0.055-0.06. Therefore, on the one hand, the high-temperature resistance of the separator can be improved, and on the other hand, this helps form a through connection path between the ion-conducting particles in the composite particles and the first inorganic particles, thereby improving the ionic conductivity of the separator.

In some embodiments, based on the mass of the coating, a percentage of the first inorganic particles is 50%-70%, for example, 51%-70%, 52%-70%, 53%-70%, 54%-70%, 55%-70%, 55%-69%, 55%-68%, 55%-67%, 55%-66%, 55%-65%, 56%-64%, 57%-63%, 58%-62%, 59%-61%, or 59%-60%. Therefore, both the high-temperature resistance and ionic conductivity of the separator can be improved. In some other embodiments of this application, based on the mass of the coating, the percentage of the first inorganic particles is 55%-65%.

In some embodiments, the first inorganic particles may include one or more of boehmite (y-AlOOH), aluminum oxide ($Al_2O_3$), barium sulfate ($BaSO_4$), magnesium oxide ($MgO$), magnesium hydroxide ($Mg(OH)_2$), silicon dioxide ($SiO_2$), tin dioxide ($SnO_2$), titanium oxide ($TiO_2$), calcium oxide ($CaO$), zinc oxide ($ZnO$), zirconia ($ZrO_2$), yttrium oxide ($Y_2O_3$), nickel oxide ($NiO$), cerium oxide ($CeO_2$), zirconium titanate ($SrTiO_3$), barium titanate ($BaTiO_3$), and magnesium fluoride ($MgF_2$). For example, the inorganic particles may include one or more of boehmite (y-AlOOH) and alumina ($Al_2O_3$).

In some embodiments, based on the mass of the coating, a percentage of the ion-conducting particles is 0.5%-3%, for example, 0.5%-2.8%, 0.5%-2.5%, 0.5%-2.3%, 0.5%-2%, 0.5%-1.8%, 0.5%-1.5%, 0.5%-1.2%, 0.6%-1.2%, 0.7%-1.1%, 0.8%-1%, or 0.9%-1%. Therefore, the ion-conducting particles with such percentage can form a through bridge with the first inorganic particles, thereby improving the ionic conductivity of the separator. In some other embodiments of this application, based on the mass of the coating, the percentage of the ion-conducting particles is 0.6%-1.2%.

In some embodiments, a dielectric constant of the ion-conducting particles is not less than 5, and the ion-conducting particles satisfying the dielectric constant can form a through connection path with the first inorganic particles, and the connection path is beneficial to lithium ion transport in the electrolyte, thereby significantly improving the ionic conductivity of the separator. In some other embodiments of this application, the dielectric constant of the ion-conducting particles is not less than 10. Therefore, the ionic conductivity of the separator can be further improved.

According to an example, for preparation of the composite particles of this application, reference may be made to the following steps:

(1) provide polymer monomers for preparing polyacrylate particles, and polymerize the polymer monomers to obtain polyacrylate polymers;
(2) add solvent and ion-conducting particles to the polyacrylate polymer obtained in step (1), and perform stirring to obtain a mixed slurry; and
(3) dry the mixed slurry obtained in step (2) to remove the solvent, and then perform grinding and pulverization to obtain the composite particles described in this application.

It should be noted that polymerization of the polymer monomers may be performed by using a polymerization method commonly used in the art, for example, polymerization may be performed in an emulsion polymerization or suspension polymerization manner.

In some embodiments, in step (1), additives, for example, emulsifier such as sodium lauryl sulfate and polymerization initiator such as ammonium persulfate, may also be added to the polymerization system of polymer monomers.

In some embodiments, in step (1), the polymer monomers for preparing polyacrylate particles include at least the following polymer monomers:

first polymer monomer having at least one ester bond, which is optionally one or more of methyl acrylate, ethyl acrylate, n-propyl acrylate, n-butyl acrylate, isobutyl acrylate, sec-butyl acrylate, tert-butyl acrylate, cyclohexyl acrylate, lauryl acrylate, 2-ethylhexyl acrylate, 2-hydroxyethyl acrylate, 2-hydroxypropyl acrylate, methyl methacrylate, ethyl methacrylate, n-butyl methacrylate, 2-ethylhexyl methacrylate, isobornyl methacrylate, lauryl methacrylate, methacrylate-2-hydroxyethyl ester, 2-hydroxypropyl methacrylate, vinyl acetate, trifluoroethyl methacrylate, glycidyl methacrylate, or trimethylolpropane triacrylate; more optionally, one or more of methyl methacrylate, lauryl acrylate, lauryl methacrylate, or trimethylolpropane triacrylate;
second polymer monomer, having at least one cyanide bond, which is optionally one or more of acrylonitrile, methacrylonitrile, and ethacrylonitrile, and more optionally one or more of acrylonitrile and methacrylonitrile; and
third polymer monomer having at least one amide bond, which is optionally one or more of acrylamide, N-methylol acrylamide, and N-butoxymethacrylamide, and more optionally one or more of acrylamide and N-methylolacrylamide.

In this way, the polyacrylate particles are polymerized by using at least the above three types of polymer monomers, so that the separator has appropriate adhesion with the electrode plate, improving the kinetic performance of the battery.

In some embodiments, a weight ratio of the first polymer monomer, the second polymer monomer, and the third polymer monomer in the polyacrylate particles formed above is 1:0-0.8:0.05-0.75, for example, 1:0.1-0.8:0.05-0.75, 1:0.1-0.7:0.05-0.75, 1:0.2-0.6:0.05-0.75, 1:0.3-0.5:0.05-0.75, 1:0.3-0.4:0.05-0.75, 1:0-0.8:0.05-0.7, 1:0-0.8:0.1-0.7, 1:0-0.8:0.15-0.65, 1:0-0.8:0.2-0.6, 1:0-0.8:0.3-0.5, or 1:0-0.8:0.4. Therefore, the kinetic performance of the battery can be improved. In some other embodiments, the weight ratio of the first polymer monomer, the second polymer monomer, and the third polymer monomer in the polyacrylate particles formed above is 1:0.1-0.6:0.1-0.6.

In some embodiments, the ion-conducting particles include at least one of second inorganic particles and organic-inorganic hybrid composite particles, where the second inorganic particles include at least one of $BaTiO_3$, $Pb(Zr,Ti)O_3(PZT)$, $Pb_{1-x}La_xZr_{1-y}Ti_yO_3(PLZT)$, $PB(Mg_3Nb_{2/3})O_3-PbTiO_3(PMN-PT)$, $HfO_2$, $SrTiO_3$, $SnO_2$, $CeO_2$, $MgO$, $NiO$, $CaO$, $ZnO$, $ZrO_2$, $Y_2O_3$, $Al_2O_3$, $TiO_2$, $SiC$, $AlO(OH)$, $Al_2O_3 \cdot H_2O$, $Li_3PO_4$, $Li_xTi_y(PO_4)_3$, $\gamma$-AlOOH, $BaSO_4$, $(Mg(OH)_2$, $SiO_2$, $SrTiO_3$, $BaTiO_3$ and $MgF_2$.

In some embodiments, the organic-inorganic hybrid composite particles include metal atoms and/or cations thereof, as well as organic ligands, and basic units forming the organic-inorganic hybrid composite particles are assembled periodically along at least one spatial direction. When the organic-inorganic hybrid composite particles use the given composition, the ionic conductivity of the separator can be significantly improved.

In some embodiments, the organic-inorganic hybrid composite particles are formed through periodic assembly of basic units represented by formula 1 along at least one spatial direction:

$$L_xM_y \cdot A_z \qquad \text{Formula 1}$$

In Formula 1, M is a cation of one or more metals selected from the following: Zn, Co, Cu, Fe, Cd, Mn, Ag, Rh, Ru, Be, Mg, Al, Sc, Cr, Ni, Y, Ti, Zr, Hf, Li, Na, K, In, Ca, Sr, Pb, lanthanide metals, and actinide metals; and y is a value in a range of 0.1-10, for example, y is 0.2-10, 0.5-10, 0.7-10, 1-10, 2-10, 3-10, 4-10, 5-10, 6-10, 7-10, 8-10, 9-10, 9.2-10, or 9.5-10. Optionally, M is a cation of one or more metals selected from the following: Zn, Co, Cu, Fe, Cd, Mn, Mg, Cr, Ni, Y, Na, and K. More optionally, M is a cation of one or more metals selected from the following: Co, Fe, Mn, and Ni. When M is a cation of two or more metals, y represents the number of all metal cations in the basic unit M shown in a single formula 1. Selecting such metal ions M can improve the ion-conducting performance of the organic-inorganic hybrid composite particles, thereby improving the ionic conductivity of the separator.

In some embodiments, in the organic-inorganic hybrid composite particles of the above formula (I), A is an atom or cation of one or more metal elements selected from the following: Li, Na, K, Rb, Cs, Be, Sr, Zn, Al, Mg, and Ca, and/or one or more molecules selected from the following: $H_2$, $O_2$, $H_2O$, $CO_2$, $NH_3$, $CH_4$, methyl formate, ethyl acetate, and propylene carbonate. z is a value ranging from 0 to 100, such as 1-95, 1.5-90, 1.6-85, 1.7-80, 1.8-75, 1.9-70, 2-65, 2.5-60, 3-50, 3.5-40, 4-30, 5-20, and 6-10, and optionally z is a value from 1.8 to 2. Optionally, A is an atom or cation of one or more metal elements and/or one or more molecules selected from the following: Li, Na, K, Zn, $H_2O$, $CO_2$, $NH_3$, $CH_4$, and methyl formate; more optionally, A is an atom or cation of one or more metal elements selected from the following: Li, Na, and K. Selecting part A in the formula (I) can improve affinity of the composite particles to the electrolyte, improve the liquid retention capacity, and also improve the kinetic performance of the secondary battery.

In some embodiments, in the organic-inorganic hybrid composite particles of the above formula (I), L is one or more ligands selected from the following: cyano group ($CN^-$), thiocyano group ($SCN^-$), nitrile and salts, acid groups, esters, and anhydrides. Optionally, L is one or more ligands selected from the following: cyano, thiocyano, or nitrile; more optionally, L is cyano; and/or the nitrile is selected from one or more of the following: linear or branched $C_2$-$C_{12}$ alkane dinitrile, linear or branched $C_3$-$C_{12}$ alkane trinitrile, linear or branched $C_4$-$C_{12}$ alkane tetranitrile, linear or branched $C_2$-$C_{12}$ olefin dinitrile, linear or branched $C_3$-$C_{12}$ olefin trinitrile, linear or branched $C_4$-$C_{12}$ olefin tetranitrile, linear or branched $C_2$-$C_{12}$ alkyne dinitrile, linear or branched $C_3$-$C_{12}$ alkyne trinitrile, and linear or branched $C_4$-$C_{12}$ alkyne tetranitrile. One or more hydrogen atoms in the nitrile are optionally substituted by one or more substituent groups selected from the following groups: cyano group, nitro group, amino group, aldehyde group, carboxyl group, halogen, $C_1$-$C_8$ alkyl group, $C_1$-$C_8$ hydroxyalkyl group, $C_1$-$C_8$ alkoxy group, $C_2$-$C_8$ alkeny group, $C_2$-$C_8$ alkynyl group, $C_3$-$C_{16}$ cycloalkyl group, $C_6$-$C_{20}$ aryl group, $C_6$-$C_{20}$ heteroaryl group, or any combination thereof, where x is a value ranging from 1 to 50, for example, 2-48, 5-45, 7-42, 10-40, 12-38, 15-35, 17-30, 20-28, or 22-25. Optionally, x is a value ranging from 3 to 6.5. Selecting the ligand L in the formula (I) can further improve the ionic conductivity of the organic-inorganic hybrid composite particles, reduce the resistance of the separator, and improve the kinetic performance of the cell.

In some embodiments, the organic-inorganic hybrid composite particles include at least one of $(CN)_6[FeMn]K_2$, $(CN)_{5.7}[Co_{0.95}Fe]K_{1.8}$, and $(CN)_{5.98}[Fe_{0.99}Mn]Na_{1.99}$. When the organic-inorganic hybrid composite particles use a given type, the safety performance and cycling performance of the battery can be further improved.

In some embodiments, in the separator of this application, the composite particles include ion-conducting particles of primary particle morphology. Further, a ratio of $D_v50$ of the first inorganic particles to $D_v50$ of the ion-conducting particles of the primary particle morphology is 0.5-200:1, for example, 1-200:1, 2-200:1, 3-200:1, 4-200:1, 5-175:1, 10-150:1, 20-125:1, 30-100:1, 40-100:1, 50-100:1, 60-100:1, 70-100:1, 80-100:1, or 90-100:1. Combining the first inorganic particles satisfying the particle size ratio with the composite particles having the ion-conducting particles within the particle size range can significantly improve the ionic conductivity of the separator. In some other embodiments, the ratio of $D_v50$ of the first inorganic particles to $D_v50$ of the ion-conducting particles is 1-4:1.

In some embodiments, in the separator of this application, $D_v50$ of the first inorganic particle is 0.5$\mu$m-2$\mu$m, for example, 0.5$\mu$m-1.8$\mu$m, 1$\mu$m-2$\mu$m, 1$\mu$m-1.8$\mu$m, 1.2$\mu$m-1.8$\mu$m, or 1.4$\mu$m-1.6$\mu$m. The first inorganic particles have good inhibitory effects on thermal shrinkage of the substrate, thereby improving the thermal stability of the separator. On the one hand, the first inorganic particles satisfying the particle size range can be uniformly dispersed in the coating of the separator, thereby improving thermal stability of the separator; on the other hand, the first inorganic particles satisfying the particle size range can form a conductive connection path with the ion-conducting particles in the composite particles, thereby significantly improving the ionic conductivity of the separator.

In some embodiments, a mass ratio of the composite particles to the first inorganic particles is (5-30):(50-70), for example, (5-30):(52-68), (5-30):(55-65), (5-30):(57-62), (5-30):(60-62), (7-28):(50-70), (10-25):(50-70), (12-22):(50-70), (15-20):(50-70), or (15-18):(50-70). In this way, on the one hand, adhesion force is present between the separator and the electrode plate to improve the kinetic performance of the battery; on the other hand, the high-temperature resistance and ionic conductivity of the separator can be improved, thereby effectively improving the cycling performance and the high-temperature safety performance of the battery.

In some embodiments, $D_v50$ of the composite particles is greater than $D_v50$ of the first inorganic particles. This not only provides appropriate adhesion between the separator and the electrode plate, but also helps form bulges on the surface of the coating, thereby improving the safety performance of the battery and also improving the kinetic performance of the cell.

In some embodiments, in the separator of this application, $D_v50$ of the composite particles is $\geq 2.5\mu m$, for example, $2.5\mu m$-$10\mu m$, $2.5\mu m$-$8\mu m$, $2.5\mu m$-$6\mu m$, $2.5\mu m$-$5\mu m$, $2.5\mu m$-$4\mu m$, or $2.5\mu m$-$3\mu m$. Therefore, on the one hand, the composite particles satisfying the range of $D_v50$ can provide appropriate adhesion force between the coating of the separator and the electrode plate; on the other hand, this helps form a convex structure on the surface of the coating, thereby improving the kinetic performance of the cell.

In some embodiments, in the separator of this application, a first agglomerate is present between the polyacrylate particles, and the first agglomerate includes at least two ion-conducting particles. Therefore, on the one hand, the composite particles are not too soft, so as to ensure proper interaction between the composite particles and the electrode plate as well as between the composite particles and the substrate under swelling of the battery or relatively large external force, thereby improving the kinetic performance of the battery. On the other hand, it can be ensured that the composite particles are not fused during the production process to block the ion transport channels, and when first agglomerates formed by ion-conducting particles are present inside or on the surface of the composite particles, it is ensured that the quasi-spherical body of the composite particles may not soften and collapse at a high temperature such as $\geq 45°C$ and at a stress state of $\geq 0.4MPa$. This further ensures proper interaction between the composite particles and the electrode plate, as well as between the composite particles and the substrate, thereby curbing deterioration of cycling performance of the battery and further improving the kinetic performance of the battery.

In some embodiments, $0.01\mu m \leq D_v50$ of the first agglomerate $\leq D_v10$ of the composite particles. Therefore, the compressive modulus of the separator can be increased.

In some embodiments, $D_v50$ of the ion-conducting particles of the primary particle morphology is $0.01\mu m$-$1\mu m$, for example, $0.01\mu m$-$0.8\mu m$, $0.05\mu m$-$1\mu m$, $0.1\mu m$-$1\mu m$, $0.2\mu m$-$1\mu m$, $0.3\mu m$-$1\mu m$, $0.4\mu m$-$1\mu m$, $0.5\mu m$-$1\mu m$, $0.6\mu m$-$1\mu m$, $0.7\mu m$-$1\mu m$, $0.8\mu m$-$1\mu m$, or $0.9\mu m$-$1\mu m$. Therefore, the ion-conducting particles satisfying the $D_v50$ can enable the separator to obtain appropriate compressive modulus, thereby improving the kinetic performance of the battery. In some other embodiments, $D_v50$ of the ion-conducting particles with the primary particle morphology is $0.5\mu m$-$1\mu m$. In this way, the kinetic performance of the battery can be improved.

It should be noted that the primary particles and secondary particles have meanings known in the art. The primary particles are particles not in an agglomerated state. The secondary particles are particles in an agglomerated state that are formed by accumulating two or more primary particles. The primary particles and the secondary particles can be easily distinguished through scanning electron microscope (SEM) images.

In some embodiments, in the separator of this application, the composite particles include a second agglomerate, and the second agglomerate includes at least two polyacrylate particles. Therefore, the composite particles are not too soft, so as to ensure proper interaction between the composite particles and the electrode plate as well as between the composite particles and the substrate of the separator under swelling of the battery or relatively large external force, thereby improving the kinetic performance of the battery. Further, $D_v50$ of the second agglomerate is $0.3\mu m$-$5\mu m$, for example, $0.5\mu m$-$5\mu m$, $0.7\mu m$-$4.5\mu m$, $1\mu m$-$4\mu m$, $1.3\mu m$-$3.5\mu m$, $1.5\mu m$-$3.2\mu m$, $1.7\mu m$-$3\mu m$, $2\mu m$-$2.8\mu m$, $2\mu m$-$2.5\mu m$, $5\mu m$-$10\mu m$, $5\mu m$-$9\mu m$, $5\mu m$-$8\mu m$, $5\mu m$-$7\mu m$, or $5\mu m$-$6\mu m$. In some other embodiments, $D_v50$ of the second agglomerate is $1\mu m$-$2\mu m$.

In some embodiments, in the composite particles of this application, the polyacrylate particles include polyacrylate particles of primary particle morphology and/or polyacrylate particles of secondary particle morphology. $D_v50$ of the polyacrylate particles of the primary particle morphology is $50nm$-$400nm$, for example, $50nm$-$375nm$, $75nm$-$375nm$, $100nm$-$350nm$, $125nm$-$325nm$, $150nm$-$300nm$, $175nm$-$275nm$, $200nm$-$250nm$, or $200nm$-$225nm$. In some other embodiments, $D_v50$ of the polyacrylate particles of the primary particle morphology is $100nm$-$200nm$. $D_v50$ of the polyacrylate particles of the secondary particle morphology is $2\mu m$-$15\mu m$, for example, $3\mu m$-$15\mu m$, $4\mu m$-$12\mu m$, $5\mu m$-$10\mu m$, $5\mu m$-$8\mu m$, $5\mu m$-$7\mu m$, or $5\mu m$-$6\mu m$.

In some embodiments, a percentage of the ion-conducting particles in the composite particles is $1wt\%$-$50wt\%$, for example, $1wt\%$-$48wt\%$, $1wt\%$-$45wt\%$, $1wt\%$-$40wt\%$, $1wt\%$-$35wt\%$, $1wt\%$-$30wt\%$, $1wt\%$-$25wt\%$, $1wt\%$-$20wt\%$, $1wt\%$-$15wt\%$, $2wt\%$-$15wt\%$, $3wt\%$-$15wt\%$, $4wt\%$-$15wt\%$, $5wt\%$-$15wt\%$, $7wt\%$-$15wt\%$, $10wt\%$-$15wt\%$, or $12wt\%$-$15wt\%$. Therefore, a percentage of the ion-conducting particles in the composite particles is controlled within the above range. On the one hand, fusion of the polyacrylate particles caused by high-temperature treatment during granulation is avoided, thereby improving the ionic conductivity of the separator; on the other hand, adhesion of the polyacrylate particles is appropriately reduced and also the compressive modulus of polyacrylate particles can be increased, thereby improving the kinetic performance of the battery. In addition, this helps form a through connection path with the first inorganic particles, thereby improving the ionic conductivity of the separator.

In some embodiments, referring to FIG. 2, bulges (the bulges include composite particles) are formed on the surface of the coating of the separator in this application, and the two-side height of the bulges is $15\mu m$-$60\mu m$, for example, $15\mu m$-$58\mu m$, $16\mu m$-$56\mu m$, $18\mu m$-$55\mu m$, $20\mu m$-$52\mu m$, $22\mu m$-$40\mu m$, $25\mu m$-$40\mu m$, $25\mu m$-$38\mu m$, $25\mu m$-$36\mu m$,

28μm-35μm, or 30μm-32μm. Therefore, on the one hand, the bulges within the height range can provide appropriate space between the separator and the electrode plate to release stress, preventing the electrode plate from breaking during the winding process and improving the safety performance; on the other hand, appropriate gap is left between the separator and the electrode plate to facilitate flow and infiltration of the electrolyte, thereby improving the kinetic performance of the battery. Further, the first agglomerate is present on surface of the bulges. Therefore, the bulges can provide appropriate adhesion between the separator and the electrode plate, thereby improving the kinetic performance of the battery.

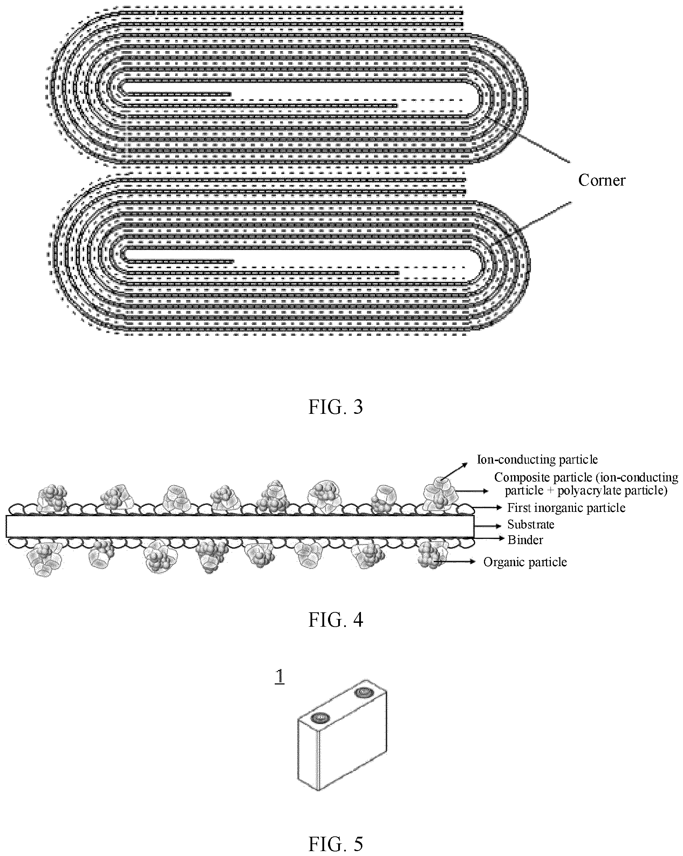

Specifically, coatings are formed on two opposite surfaces of the substrate, and the sum of the heights of the bulges on the coatings of the two sides is the two-side height of the bulges, and the testing method for the two-side height of the bulges includes: referring to FIG. 3, first stacking the negative electrode plate, the separator, and the positive electrode plate in sequence to form a cell and then winding the cell into a roll (the outermost layer of the cell ends with a convex surface of the positive electrode plate), and using a CT device (ZEISS-1500) to scan a position 15±1mm below an edge of the negative electrode plate at a corner of the wound cell; taking samples along the horizontal and oblique angle (30-45°) from the obtained CT image, and drawing a line along a direction with the largest gap; for the innermost 5 layers, sampling from a convex surface of the innermost positive electrode plate to a convex surface of the 5th layer positive electrode plate, and taking an average value of 4 layers; and for layers 6 and afterwards, sampling from the convex surface of the innermost positive electrode plate to a convex surface of the outermost positive electrode plate, and taking a value for every 5 layers.

Gap average of the innermost 5 layers = [CT measured distance − 4 * thickness of the negative electrode plate after cold pressing * (1 + rebound rate of the negative electrode plate) − 4 * thickness of the positive electrode plate after cold pressing (1 + rebound rate of the positive electrode plate) − 8 * thickness of the separator]/8;

gap average of layers 6−10 and afterwards = [CT measured distance − 5 * thickness of the negative electrode plate after cold pressing * (1 + rebound rate of the negative electrode plate) − 5 * thickness of the positive electrode plate after cold pressing (1 + rebound rate of the positive electrode plate) − 10 * thickness of the separator]/10;

rebound rate of the negative electrode plate = (thickness of the negative electrode plate before being put into the housing − thickness of the negative electrode plate after cold pressing)/thickness of the negative electrode plate after cold pressing;

rebound rate of the positive electrode plate = (thickness of the positive electrode plate before being put into the housing − thickness of the positive electrode plate after cold pressing)/thickness of the positive electrode plate after cold pressing;

and

two-side height of the bulges of the separator = (gap average of the

innermost 5 layers + gap average of layers 6–10 and afterwards)/2.

In some embodiments, the binder in the separator of this application may include a linear copolymer having hydroxyl group and carboxylate, and the carboxylate portion in the linear copolymer can combine with the first inorganic particles and the composite particles through chemical force (such as ionic bonds or hydrogen bonds), thereby improving the heat resistance of the separator and improving the kinetic performance of the cell. In addition, the hydroxyl group in the linear copolymer can improve the adhesion between the coating and the substrate and avoid peeling. Specifically, for the linear copolymer contained in the binder, the hydroxyl group contained in the linear copolymer undergoes hydrogen bonding with the composite particles and the first inorganic particles; the nitrogen and oxygen atoms contained in the linear copolymer undergo hydrogen bonding with the composite particles and the first inorganic particles; the carboxylate portion (including lithium ions or sodium ions) contained in the linear copolymer forms ionic bonds with the composite particles and the first inorganic particles. In this way, through selection of appropriate particle materials and binder, the separator of this application has the beneficial effects of heat resistance, penetration resistance of foreign matters, good electrolyte infiltration, and low resistance. Further, when such separator is used in a battery, the safety performance and cycling performance of the battery can be improved.

In some embodiments, the binder in the separator of this application includes a linear copolymer with hydroxyl group, carboxylate, amide group, and epoxy group. The epoxy group and amide group contained in the linear copolymer can further improve the safety performance of the separator. Specifically, the amide group may undergo hydrogen bonding with the composite particles and the first inorganic particles. The nitrogen and oxygen atoms contained in the linear copolymer may undergo hydrogen bonding with the first inorganic particles and the hydroxyl, amide, carboxyl, or pyrrolidone group of the composite particles, thereby improving the heat resistance of the separator.

In addition, the hydroxyl group or amide group contained in the binder may undergo nucleophilic substitution reactions with the ester, carboxyl, sulfonamide, or pyrrolidone group of the composite particle. The carboxyl group or amide group in the binder may also undergo nucleophilic addition reactions with the epoxy group present in the composite particles.

In some embodiments, the carboxylate in the binder may be lithium carboxylate. Lithium carboxylate selected for use can effectively form strong ionic bonds with the composite particles and the first inorganic particles, further improving the overall temperature resistance of the coating, especially at temperatures above 130°C. In this way, the separator does not shrink. When a large amount of heat is generated during nail penetration, the separator does not shrink to come into large-area contact with the positive and negative electrode plates, thereby significantly improving the nail penetration depth. Such effect runs through the coating and an interface between the base film and the coating, and this effect features strong polarity. Along with presence of lithium ions, such effect accelerates infiltration and diffusion of the electrolyte, thereby improving the kinetic performance of the cell.

In some embodiments, the linear copolymer in the separator of this application includes a polymerization product of the following types of monomers:

(1) first-type monomer, where the first-type monomer includes at least one of acrylic acid, methacrylic acid, methyl methacrylate, tert-butyl methacrylate, isobornyl methacrylate, methylol acrylamide, acrylamide, styrene, and acrylonitrile; optionally, the first-type monomer includes at least one of styrene, methacrylic acid, acrylamide, acrylic acid and acrylonitrile;

(2) second-type monomer, where the second-type monomer includes at least one of ethyl acrylate, n-butyl acrylate, isobutyl acrylate, tert-butyl acrylate, 2-ethylhexyl acrylate, n-octyl acrylate, decyl acrylate, cyclohexyl acrylate, ethyl methacrylate, n-butyl methacrylate, isobutyl methacrylate, 2-ethylhexyl methacrylate, lauryl methacrylate, n-hexyl methacrylate, tridecyl methacrylate, octadecyl methacrylate, cyclohexyl methacrylate, benzyl methacrylate, ethyleneurea ethyl methacrylate, dicyclopentene ethoxy methacrylate, tetrahydrofuryl methacrylate, trifluoroethyl methacrylate, ethylene urea ethyl methacrylate, propylene methacrylate, dicyclopentene ethoxy methacrylate, tetrahydrofuryl methacrylate, and trifluoroethyl acrylate; optionally, the second-type monomer includes at least one of n-butyl acrylate and n-hexyl methacrylate;

(3) third-type monomer, where the third-type monomer includes at least one of 2-hydroxyethyl acrylate, 2-hydroxypropyl acrylate, methacrylate-2-hydroxyethyl ester, 2-hydroxypropyl methacrylate, glycidyl acrylate, glycidyl methacrylate, dimethylaminoethyl methacrylate, diethylaminoethyl methacrylate, vinyltrimethoxysilane, vinyltriethoxysilane, vinyl Triisopropoxysilane, $\gamma$-methacryloxypropyltrimethoxysilane, N-methylolacrylamide, N-butoxymethyl(meth)acrylamide, diacetoneacrylamide, ethyl methacrylate acetoacetate, divinylbenzene, and epoxy resin with an epoxy value of 0.35-0.50; optionally, the third-type monomer includes at least one of methacrylate-2-hydroxyethyl ester, epoxy resin with an epoxy value of 0.35-0.50, and divinylbenzene; and

(4) fourth-type monomer, where the fourth-type monomer includes at least one of polyvinyl alcohol, polypropylene alcohol, polypropylene glycol, polyethylene glycol, and polyvinyl acid alcohol; optionally, the fourth-type monomer is polyvinyl alcohol, where a degree of alcoholysis of the fourth-type monomer is $\geq 85\%$, and an average degree of polymerization is 400 to 2000; optionally, the degree of alcoholysis of the fourth-type monomer is $\geq 88\%$, and the average degree of polymerization is 500 to 1600.

It should be noted that in this application, the term "degree of alcoholysis" refers to a percentage of hydroxyl groups in the original groups in the product obtained through alcoholysis, and the unit is mole fraction %. For example, there are 100 original groups (ester groups) and 60 hydroxyl groups after alcoholysis; in this case, the degree of alcoholysis is 60%.

It should be noted that in this application, the term "average degree of polymerization" refers to a statistical average of degrees of polymerization for a polymer that includes molecules of the same series of polymers with different degrees of polymerization. There are two commonly used methods to express the average degree of polymerization: the degree of polymerization obtained by averaging the number of molecules, which is referred to as a number-average degree of polymerization; and the degree of polymerization obtained by averaging the weight, called a weight-average degree of polymerization. The "average degree of polymerization" described in this application is a number-average degree of polymerization.

In this way, the linear copolymer with the above monomers enables the binder to have good wettability on the substrate, thereby improving good coating rate of the substrate and also improving compactness of the coating. More importantly, this increases adhesion of the first inorganic particles and composite particles to the substrate and greatly improves thermal shrinkage performance of the separator, thereby improving the safety performance of the cell. Also, this implements chemical action with the particle materials in the coating to form a moderately compact structure, further improving the safety performance of the separator. In addition, such three-dimensional interaction opens up lithium ion transport channels, improving the ionic conductivity of the separator and improving the kinetic performance of the cell.

In some embodiments, in the separator of this application, for the above linear copolymer, after polymerization of the first-type monomer, the second-type monomer, the third-type monomer, and the fourth-type monomer, it is necessary to add a pH regulator to adjust pH of the system to 5-7, and the pH regulator includes at least one of lithium hydroxide, calcium hydroxide, sodium hydroxide, and ammonia water. In some other embodiments, the pH regulator includes lithium hydroxide. After the monomers are polymerized, the pH of the system is adjusted by adding the pH regulator, which facilitates dispersion of the first inorganic particles in the binder, thereby further improving interface of the coating and improving the cycling performance and safety performance of the cell. In particular, in some embodiments, the pH regulator is lithium hydroxide. Not limited by any theory, the inventors have found that when lithium hydroxide is used as the pH regulator, the lithium ions brought during pH adjustment can improve the electrical conductivity and increase the glass transition temperature (Tg) of the obtained separator, further improving the cycling performance and safety performance of the separator.

In some embodiments, in the separator of this application, based on the total weight of all monomers contained in the linear copolymer, the first-type monomer accounts for 60wt% to 85wt%, optionally, 70wt% to 80wt%; and/or the second-type monomer accounts for 1wt% to 10wt%, optionally, 5wt% to 10wt%; and/or the third-type monomer accounts for 1wt% to 10wt%, optionally, 1wt% to 5wt%; and/or the fourth-type monomer accounts for 1wt% to 20wt%, optionally, 10wt% to 15wt%.

In some embodiments, a proportion of the first-type monomer may be within a range confined by any two of the following values: 60wt%, 62wt%, 64wt%, 66wt%, 68wt%, 70wt%, 72wt%, 74wt%, 76wt%, 78wt%, 80wt%, 82wt%, or 85wt%.

In some embodiments, a proportion of the second-type monomer may be within a range confined by any two of the following values: 1wt%, 2wt%, 3wt%, 4wt%, 5wt%, 6wt%, 7wt%, 8wt%, 9wt%, or 10wt%.

In some embodiments, a proportion of the third-type monomer may be within a range confined by any two of the following values: 1wt%, 2wt%, 3wt%, 4wt%, 5wt%, 6wt%, 7wt%, 8wt%, 9wt%, or 10wt%.

In some embodiments, a proportion of the fourth-type monomer may be within a range confined by any two of the following values: 1wt%, 2wt%, 3wt%, 4wt%, 5wt%, 6wt%, 7wt%, 8wt%, 9wt%, 10wt%, 11wt%, 12wt%, 13wt%, 14wt%, 15wt%, 16wt%, 17wt%, 18wt%, 19wt%, or 20wt%.

Controlling proportions of the monomers within the above ranges, the separator having the composite particles and the first inorganic particles of this application can be obtained. In some embodiments, in the separator of this application, the linear copolymer may include the following polymers:

A. 30% styrene-15% methacrylic acid-10% acrylamide-15% acrylic acid-5% acrylonitrile-10% n-butyl acrylate-2% methacrylate-2-hydroxyethyl ester-1% E44 epoxy resin-12% polyvinyl alcohol copolymer;
B. 35% styrene-15% methacrylic acid-10% acrylamide-15% acrylic acid-5% acrylonitrile-5% n-butyl acrylate-2% methacrylate-2-hydroxyethyl ester-1% E44 epoxy resin-12% polyvinyl alcohol copolymer;

C. 30% styrene-15% methacrylic acid-10% acrylamide-15% acrylic acid-5% acrylonitrile-10% n-butyl acrylate-3% methacrylate-2-hydroxyethyl ester-12% polyvinyl alcohol copolymer;

D. 30% styrene-15% methacrylic acid-15% acrylamide-15% acrylic acid-5% acrylonitrile-5% n-butyl acrylate-2% methacrylate-2-hydroxyethyl ester-1% E44 epoxy resin-12% polyvinyl alcohol copolymer;

E. 40% styrene-15% acrylamide-15% acrylic acid-10% n-butyl acrylate-5% n-hexyl methacrylate-2% methacrylate-2-hydroxyethyl ester-1% E44 epoxy resin-12% polyvinyl alcohol copolymer; and

F. 35% styrene-15% methacrylic acid-10% acrylamide-15% acrylic acid-5% acrylonitrile-5% n-butyl acrylate-2% divinylbenzene-1% E44 epoxy resin-12% polyvinyl alcohol copolymer.

The average epoxy value of the E44 epoxy resin is 0.44, the degree of alcoholysis of the polyvinyl alcohol is 88% and the degree of polymerization is 1000, and the percentage is a weight percent of the monomer based on the total weight of all monomers.

In some embodiments, in the separator of this application, the weight-average molecular weight of the linear copolymer is $1\times10^3$g/mol to $200\times10^3$g/mol, optionally, $2\times10^3$g/mol to $80\times10^3$g/mol. In some embodiments, the weight-average molecular weight of the linear copolymer may be within a range confined by any two values of the following: $1\times10^3$g/mol, $5\times10^3$g/mol, $10\times10^3$g/mol, $20\times10^3$g/mol, $30\times10^3$g/mol, $40\times10^3$g/mol, $50\times10^3$g/mol, $60\times10^3$g/mol, $70\times10^3$g/mol, $80\times10^3$g/mol, $100\times10^3$g/mol, $150\times10^3$g/mol, or $200\times10^3$g/mol. With the weight-average molecular weight of the linear copolymer being controlled within the above range, the linear copolymer can have moderate chemical reaction with granular materials, and have moderate wetting effects on the substrate.

According to some examples, the weight-average molecular weight (Mw) of the linear copolymer was measured using Tosoh Corporation HLC-8320GPC gel permeation chromatography (SuperMultiporeHZ series semi-micro SEC column, standard product is polystyrene).

In some embodiments, in the separator of this application, the mass ratio of the composite particles to the binder is (80-90):(5-20), for example, (80-90):(6-20), (80-90):(7-18), (80-90):(8-15), (80-90):(9-11), (80-90):10, (81-89):(5-20), (82-88):(5-20), (83-87):(5-20), (84-86):(5-20), or 85:(5-20). The inventors have found that mixing the composite particles and the binder in the coating according to this ratio can improve the safety performance and energy density of the battery, and also implement appropriate adhesion between the separator and the electrode plate, thereby improving the kinetic performance of the battery. In some other embodiments, in the separator of this application, the mass ratio of the composite particles to the binder is (85-90):(8-15).

In some embodiments, in the separator of this application, the coating further includes organic particles. The organic particles include at least one of polytetrafluoroethylene particles, polychlorotrifluoroethylene particles, polyvinyl fluoride particles, polyvinylidene fluoride particles, polyethylene particles, polypropylene particles, polyacrylonitrile particles, polyethylene oxide particles, copolymer particles of fluorine-containing alkenyl monomer units and vinyl monomer units, copolymer particles of fluorine-containing alkenyl monomer units and acrylate monomer units, copolymer particles of fluorine-containing alkenyl monomer units and acrylic monomer units, and modified compound particles of the homopolymers or copolymers. Referring to FIG. 4, the organic particles and the composite particles form bulges on the surface of the coating. In this way, the cycling performance and safety performance of the battery can be improved.

In some embodiments, the organic particles in the separator of this application form third agglomerate. $D_v50$ of the third agglomerate is 5$\mu$m-30$\mu$m, for example, 5$\mu$m-28$\mu$m, 5$\mu$m-25$\mu$m, 5$\mu$m22$\mu$m, 5$\mu$m-20$\mu$m, 5$\mu$m-20$\mu$m, 5$\mu$m-18$\mu$m, 5$\mu$m-15$\mu$m, 5$\mu$m-12$\mu$m, 5$\mu$m-10$\mu$m, 5$\mu$m-8$\mu$m, or 5$\mu$m-6$\mu$m.

In some embodiments, the third agglomerate includes organic particles of primary particle morphology, and a gap is present between two adjacent organic particles. The gap may serve as an ion transport channel, thereby improving the ionic conductivity of the separator. In some embodiments, $D_v50$ of the organic particles of the primary particle morphology is 50nm-400nm, for example, 50nm-375nm, 75nm-375nm, 100nm-350nm, 125nm-325nm, 150nm-300nm, 175nm-275nm, 200nm-250nm, or 200nm-225nm. In some other embodiments, $D_v50$ of the organic particles of the primary particle morphology is 100nm-200nm.

In this application, $D_v50$ is a corresponding particle size when a cumulative volume percentage reaches 50%, and $D_v10$ is a corresponding particle size when a cumulative volume percentage reaches 10%. In this application, both $D_v10$ and $D_v50$ of the composite particles may be measured by using a particle size distribution laser diffraction method. For example, they are determined using a laser particle size analyzer (for example, Malvern Master Size 3000) according to the standard GB/T19077-2016. $D_v50$ of the ion-conducting particles with the primary particle morphology, $D_v50$ of the polyacrylate particles with the primary particle morphology, and $D_v50$ of the polyacrylate particles with the secondary particle morphology can be obtained through statisitics based on a SEM image of the separator. For example, a SEM image of the separator at a magnification of 10Kx is obtained, 5 parallel samples for each sample, 10 positions for each parallel sample, and 20 points for statistics at each position, and finally an average value is obtained and used as a corresponding particle size. $D_v50$ of the first agglomerate, $D_v50$ of the second agglomerate, and $D_v50$ of the third agglomerate can be obtained through statisitics based on a CP diagram of the separator, for example, a CP diagram of the separator at a magnification of SKx is obtained, 5 parallel samples for each sample, 10 positions for each parallel sample, and 20 points for statistics collection at each position, and finally an average value is obtained and used as a corresponding particle size.

In some embodiments, the mass ratio of the composite particles to the organic particles is (20-90):(0-70). For example, the mass ratio of the composite particles to the polyvinylidene fluoride particles is (20-90):(5-65), (20-90):(10-60), (20-90):(20-50), (20-90):(30-40), (30-80):(0-70), (40-70):(0-70), (50-60):(0-70), (30-80):(5-65), (40-65):(10-55), (45-60):(20-45), or (55-60):(30-45). Therefore, wettability and distribution uniformity of the electrolyte can be improved, the high-temperature storage performance of the battery can be improved, and the safety performance and cycling performance of the battery can be improved. In some other embodiments, a mass ratio of the composite particles to the organic particles is (45-90):(0-45). Therefore, the safety performance and cycling performance of the battery can be improved.

In some embodiments, a single-side coating weight per unit area of the separator is $\leq 1g/m^2$, for example, $0.2g/m^2$-$1g/m^2$, $0.3g/m^2$-$0.9g/m^2$, $0.4g/m^2$-$0.8g/m^2$, $0.5g/m^2$-$0.7g/m^2$, or $0.5g/m^2$-$0.6g/m^2$. When the single-side coating weight per unit area of the separator is within the given range, the energy density of the battery can be further improved under the premise of ensuring the cycling performance and safety performance of the battery.

In some embodiments, the coating may further include other organic compounds, for example, a polymer for improving heat resistance, a dispersant, a wetting agent, a binder of another type, and the like. The foregoing other organic compounds are all non-granular substances in the coating. This application imposes no particular limitation on types of the foregoing other organic compounds, which may be any well-known material with good improvement performance.

In this application, the substrate is a membrane material with a porous structure having good chemical stability and mechanical stability. In some embodiments, the substrate may be a single-layer membrane material, or a multi-layer composite membrane material. When the substrate is a multi-layer composite membrane material, each layer may be made of the same or different materials.

In some embodiments, in the separator of this application, the substrate may be a porous film or a porous nonwoven net including one or more of the following: polyethylene, polypropylene, polyethylene terephthalate ester, polybutylene terephthalate, polyesters, polyacetals, polyamide, polycarbonate, polyimide, polyetheretherketone, polyaryletherketone, polyetherimide, polyamideimide, polybenzimidazole, polyethersulfone, polyphenylene oxide, cycloolefin copolymer, polyphenylene sulfide, and polyethylene naphthalene. In other embodiments, the substrate is a porous film or a porous nonwoven net including polyethylene and/or polypropylene. Selecting the above substrate for preparation of the separator is conducive to combination of the substrate and the coating through the binder, forming a moderately dense, porous, and lithium ion-conductive separator.

In some embodiments, in the separator of this application, the substrate has a porosity of 10%-95%, for example, 15%-90%, 20%-85%, 25%-80%, 30%-75%, 35%-70%, 40%-65%, 45%-60%, or 50%-55%. In some other embodiments, the substrate in the separator of this application has a porosity of 35%-45%. Therefore, the ionic conductivity of the separator can be improved and the probability of contact between the positive electrode plate and the negative electrode plate can be reduced. In some embodiments, in the separator of this application, the substrate has a pore diameter of $0.1\mu m$-$50\mu m$, for example, $0.5\mu m$-$50\mu m$, $1\mu m$-$45\mu m$, $5\mu m$-$40\mu m$, $10\mu m$-$35\mu m$, $15\mu m$-$30\mu m$, or $20\mu m$-$25\mu m$. In some other embodiments, in the separator of this application, the substrate has a pore diameter of $0.1\mu m$-$5\mu m$. Selecting the substrate with the above pore structure makes the separator have good ionic conductivity, reduces the probability of direct contact between the positive electrode plate and the negative electrode plate, and improves the kinetic and safety performance of the cell.

In some embodiments, a thickness of the substrate is $\leq 10\mu m$; for example, the thickness of the substrate may be $5\mu m$-$10\mu m$, $5\mu m$-$9\mu m$, or $7\mu m$-$10\mu m$. When the thickness of the substrate is controlled within the given range, the energy density of the battery can be further improved with the cycling performance and safety performance of the battery ensured.

In some embodiments of this application, a peeling force of the coating is more than 40N/m; after the separator is placed in an environment at 150°C for 1 hour without clamping, its thermal shrinkage rate in the machine direction (MD) or transverse direction (TD) is below 5%, and a damage size under the heat gun at 200°C is 0; the adhesion force between the separator and the electrode plate is above 1.0N/m, and the ionic conductivity at 25°C is above 0.95ms/cm.

According to some examples, the material types of polyacrylate particles, organic particles, and binder can be tested using devices and methods known in the art. For example, infrared spectrum of a material can be tested to determine characteristic peaks that the material contains, so as to determine a material category. In particular, infrared spectroscopy can be performed on the organic particles by using instruments and methods known in the art, for example, an infrared spectrometer. For example, the test is performed by using an IS10 Fourier transform infrared spectrometer from Nicolet (Nicolet) of the USA, according to general rules of GB/T6040-2002 infrared spectroscopy method.

A second aspect of this application further provides a preparation method for separator, including the following steps:

(1) providing a substrate; and

(2) forming a coating on at least part of a surface of the substrate, where the coating includes composite particles, first inorganic particles, and a binder, the composite particles form bulges on a surface of the coating, the composite particles include polyacrylate particles and ion-conducting particles, and the ion-conducting particle is present between at least two of the polyacrylate particles; where the mass ratio of the first inorganic particles to the ion-conducting particles is 1:0.007-0.06.

Specifically, the substrate, composite particles, first inorganic particles, and binder are the same as those described above, and details are not repeated herein.

In some embodiments, the separator includes a substrate and a coating, the coating being disposed on only one surface of the substrate.

In some embodiments, the separator includes a substrate and a coating, the coating being disposed on two surfaces of the substrate.

In some embodiments, step (2) can be performed by the following steps: (2-1) providing a coating slurry, where the coating slurry includes composite particles, first inorganic particles, and a binder; and (2-2) applying the coating slurry on at least one side of the substrate, followed by drying to obtain the separator.

In some embodiments, in step (2-1), a solvent in the coating slurry may be water, such as deionized water.

In some embodiments, in step (2-1), the coating slurry may further include other organic compounds, for example, may further include a polymer for improving heat resistance, a dispersant, a wetting agent, and an emulsion-like binder. The other organic compounds are all non-granular in the dried coating.

In some embodiments, in step (2-1), the coating slurry may further include organic particles, and the organic particles include at least one of polytetrafluoroethylene particles, polychlorotrifluoroethylene particles, polyvinyl fluoride particles, polyvinylidene fluoride particles, polyethylene particles, polypropylene particles, polyacrylonitrile particles, polyethylene oxide particles, copolymer particles of fluorine-containing alkenyl monomer units and vinyl monomer units, copolymer particles of fluorine-containing alkenyl monomer units and acrylate monomer units, copolymer particles of fluorine-containing alkenyl monomer units and acrylic monomer units, and modified compound particles of the homopolymers or copolymers.

In some embodiments, in step (2-1), a solid content of the coating slurry may be controlled within 28%-45% by weight, for example, 30%-38%. When the solid content of the coating slurry is within the foregoing range, a problem related to a membrane surface of the coating can be effectively avoided and a probability of uneven coating can be reduced, thereby further improving the cycling performance and safety performance of the battery.

In some embodiments, in step (2-2), the coating application is done by a coater.

In embodiments of this application, a model of the coater is not specially limited, and a coater purchased from the market may be used.

In some embodiments, in step (2-2), the coating may be processes such as transfer coating, rotary spraying, and dip coating. For example, the coating is the transfer coating.

In some embodiments, the coater includes a gravure roller, and the gravure roller is used for transferring the coating slurry to the substrate.

In some embodiments, the number of lines of the gravure roller may be 100LPI-300LPI, for example, 125LPI-190LPI (LPI is line per inch). When the number of lines of the gravure roller is within the foregoing range, this helps control the number of composite particles and polyvinylidene fluoride particles, thereby further improving the cycling performance and safety performance of the separator.

In some embodiments, in step (2-2), a speed of the coating may be controlled within 30m/min-90m/min, for example, 50m/min-70m/min. When the speed of the coating is within the foregoing range, the problem related to the membrane surface of the coating can be effectively avoided and the probability of the uneven coating can be reduced, thereby further improving the cycling performance and safety performance of the battery.

In some embodiments, in step (2-2), a line speed ratio of the coating may be 0.8-2.5, for example, 0.8-1.5 or 1.0-1.5.

In some embodiments, in step (2-2), a drying temperature may be 40°C-70°C, for example, may be 50°C-60°C.

In some embodiments, in step (2-2), a drying time may be 10s-120s, for example, may be 20s-80s or 20s-40s.

Controlling the foregoing process parameters within the given ranges can further improve use performance of the separator in this application. Those skilled in the art can selectively adjust one or more of the foregoing process parameters according to actual production.

The foregoing substrate, composite particles, first organic particles, binder, and organic particles may be purchased from the market.

A third aspect of this application provides a battery, including the above separator according to the first aspect or the separator prepared according to the second aspect.

The battery is a battery that can be charged after being discharged, to activate active materials for continuous use.

Generally, the battery includes a positive electrode plate, a negative electrode plate, a separator, and an electrolyte. During charging and discharging of the battery, active ions are intercalated and deintercalated back and forth between the positive electrode plate and the negative electrode plate. The separator is provided between the positive electrode plate and the negative electrode plate, and plays a role of isolation. The electrolyte conducts ions between the positive electrode plate and the negative electrode plate.

[Positive electrode plate]

In the battery, the positive electrode plate usually includes a positive electrode current collector and a positive electrode film layer provided on the positive electrode current collector, where the positive electrode film layer includes a positive electrode active material.

The positive electrode current collector may use a common metal foil sheet or a composite current collector (the composite current collector can be made by providing a metal material on a polymer matrix). In an example, the positive electrode current collector may use an aluminum foil.

A specific type of the positive electrode active material is not limited. An active material known in the art that can be used as the positive electrode of the battery, and those skilled in the art may select an active material based on actual needs.

In an example, the positive electrode active material may include, but is not limited to, one or more of lithium transition metal oxide, olivine-structured lithium-containing phosphate, and modified compounds thereof. Examples of the lithium transition metal oxide may include, but are not limited to, one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and modified compounds thereof. Examples of the olivine-structured lithium-containing phosphate may include, but are not limited to, one or more of lithium iron phosphate, composite materials of lithium iron phosphate and carbon, lithium manganese phosphate, composite materials of lithium manganese phosphate and carbon, lithium manganese iron phosphate, composite materials of lithium manganese iron phosphate and carbon, and modified compounds thereof. These materials are all commercially available.

The modified compounds of the foregoing materials may be obtained through doping modification and/or surface coating modification to the materials.

The positive electrode film layer generally may optionally include a binder, a conductive agent, or other optional additives.

In an example, the conductive agent may be one or more of superconducting carbon, acetylene black, carbon black, Ketjen black, carbon dot, carbon nanotube, Super P (SP), graphene, and carbon nanofiber.

In an example, the binder may be one or more of styrene-butadiene rubber (SBR), water-based acrylic resin (water-based acrylic resin), polyvinylidene fluoride (PVDF), polytetrafluoroethylene (PTFE), ethylene-vinyl acetate copolymer (EVA), polyacrylic acid (PAA), carboxymethyl cellulose (CMC), polyvinyl alcohol (PVA), and polyvinyl butyral (PVB).

[Negative electrode plate]

In the battery, the negative electrode plate usually includes a negative electrode current collector and a negative electrode film layer provided on the negative electrode current collector, where the negative electrode film layer includes a negative electrode active material.

The negative electrode current collector may use a common metal foil sheet or a composite current collector (for example, the composite current collector may be formed by providing a metal material on a polymer matrix). In an example, the negative electrode current collector may use a copper foil.

A specific type of the negative electrode active material is not limited. An active material known in the art that can be used as the negative electrode of the battery, and those skilled in the art may select an active material based on actual needs. In an example, the negative electrode active material may include, but is not limited to, one or more of artificial graphite, natural graphite, hard carbon, soft carbon, silicon-based material, and tin-based material. The silicon-based material may include one or more of elemental silicon, silicon-oxygen compounds (such as silicon monoxide), silicon-carbon compounds, silicon-nitrogen compounds, and silicon alloys. The tin-based material may include one or more of elemental tin, tin-oxygen compounds, and tin alloys. These materials are all commercially available.

In some embodiments, the negative electrode active material may include a silicon-based material to further improve energy density of the battery.

The negative electrode film layer generally may optionally include a binder, a conductive agent, or other optional additives.

In an example, the conductive agent may include one or more of superconducting carbon, acetylene black, carbon black, Ketjen black, carbon dots, carbon nanotubes, graphene, and carbon nanofibers.

In an example, the binder may include one or more of styrene-butadiene rubber (SBR), water-borne acrylic resin (water-based acrylic resin), polyvinylidene fluoride (PVDF), polytetrafluoroethylene (PTFE), ethylene vinyl acetate (EVA), polyvinyl alcohol (PVA), and polyvinyl butyral (PVB).

In an example, other optional additives may be a thickening and dispersing agent (for example, sodium carboxymethyl cellulose CMC-Na) or a PTC thermistor material.

[Electrolyte]

The battery may include an electrolyte, and the electrolyte conducts ions between the positive electrode and the negative electrode. The electrolyte may include an electrolytic salt and a solvent.

In an example, the electrolyte salt may include one or more of lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bis(fluorosulfonyl)imide (LiFSI), lithium bistrifluoromethanesulfonimide (LiTFSI), lithium trifluoromethanesulfonate (LiTFS), lithium difluoro(oxalato)borate (LiDFOB), lithium dioxalate borate (LiBOB), lithium difluorophosphate ($LiPO_2F_2$), lithium difluoro(dioxalato)phosphate (LiDFOP), and lithium tetrafluoro oxalato phosphate (LiTFOP).

As an example, the solvent may include one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoro ethylene carbonate (FEC), methylmethyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methyl sulfonyl methane (MSM), methyl ethyl sulfone (EMS), and diethyl sulfone (ESE).

In some embodiments, the electrolyte further includes an additive. For example, the additive may include a negative electrode film forming additive, or may include a positive electrode film forming additive, or may include an additive capable of improving some performance of a battery, for example, an additive for improving over-charge performance of the battery, an additive for improving high-temperature performance of the battery, and an additive for improving low-temperature performance of the battery.

In some embodiments, the battery can be a lithium ion secondary battery.

Embodiments of this application do not impose any special limitations on a shape of the battery, and the battery may be of a cylindrical shape, a rectangular shape, or any other shapes. FIG. 5 shows a battery 1 with a rectangular structure in an example.

In some embodiments, the battery may include an outer package. The outer package is used for packaging a positive electrode plate, a negative electrode plate, and an electrolyte.

In some embodiments, the outer package may include a housing and a cover plate. The housing may include a base plate and a side plate connected onto the base plate, and the base plate and the side plate enclose an accommodating cavity. The housing has an opening communicating with the accommodating cavity, and the cover plate can cover the opening to close the accommodating cavity.

A positive electrode plate, a negative electrode plate, and a separator may be made into an electrode assembly through winding or lamination. The electrode assembly is packaged in the accommodating cavity. The electrolyte may be a liquid electrolyte, and the liquid electrode infiltrates into the electrode assembly. There may be one or more electrode assemblies in the battery, and the quantity may be adjusted as required.

In some embodiments, the outer package of the battery may be a hard shell, for example, a hard plastic shell, an aluminum shell, or a steel shell.

The outer package of the battery may alternatively be a soft package, for example, a soft pouch. A material of the soft package may be plastic, for example, may include one or more of polypropylene (PP), polybutylene terephthalate (PBT), polybutylene succinate (PBS), and the like.

In some embodiments, batteries may be assembled into a battery module, and the battery module may include a plurality of batteries. A specific quantity may be adjusted based on application and a capacity of the battery module.

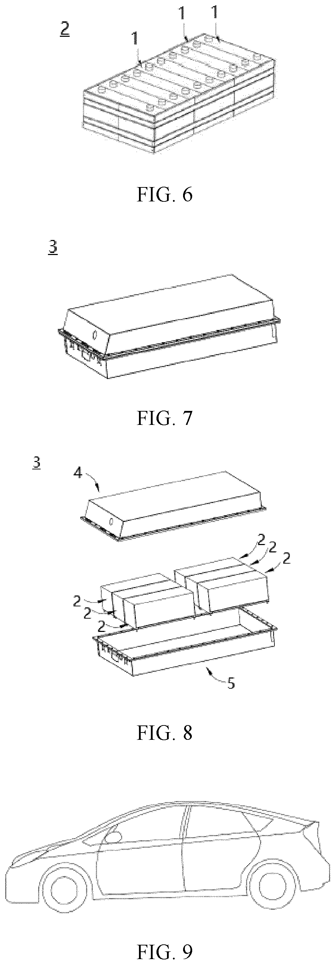

FIG. 6 shows a battery module 2 in an example. Referring to FIG. 6, in the battery module 2, a plurality of batteries 1 may be sequentially arranged in a length direction of the battery module 2. Certainly, an arrangement may be made in any other manner. Further, the plurality of batteries 1 may be fastened through fasteners.

The battery module 2 may alternatively include a shell with an accommodating space, and the plurality of secondary batteries 1 are accommodated in the accommodating space. In some embodiments, the battery module may be further assembled into a battery pack, and a quantity of battery modules included in the battery pack may be adjusted based on application and capacity of the battery pack.

FIG. 7 and FIG. 8 show a battery pack 3 in an example. Referring to FIG. 7 and FIG. 8, the battery pack 3 may include a battery box and a plurality of battery modules 2 arranged in the battery box. The battery box includes an upper box body 4 and a lower box body 5. The upper box body 4 can cover the lower box body 5 to form an enclosed space for accommodating the battery module 2. The plurality of battery modules 2 may be arranged in the battery box in any manner.

[Electric apparatus]

This application further provides an electric apparatus. The electric apparatus includes the battery, and the battery is used to provide electric energy. Specifically, the battery may be used as a power source of the electric apparatus, and may also be used as an energy storage unit of the electric apparatus. The electric apparatus may be, but is not limited to, a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, an energy storage system, and the like.

FIG. 9 shows an electric apparatus as an example. The electric apparatus is a battery electric vehicle, a hybrid electric vehicle, a plug-in hybrid electric vehicle, or the like.

In another example, the electric apparatus may be a mobile phone, a tablet computer, or a notebook computer. Such electric apparatus is usually required to be light and thin, and may use a battery as a power source.

To describe the technical problems solved by embodiments of this application, technical solutions, and beneficial effects of this application more clearly, the following further provides descriptions in detail with reference to the embodiments and accompanying drawings. Apparently, the described embodiments are merely some rather than all embodiments of this application. The following description of at least one exemplary embodiment is merely illustrative and definitely is not construed as any limitation on this application or on use of this application. All other embodiments obtained by a person of ordinary skill in the art based on the embodiments of this application without creative efforts shall fall within the protection scope of this application.

I. Preparation of separator

(1) A PE substrate was provided, with a thickness of 9$\mu$m, a pore diameter of 50nm and a porosity of 38%.

(2) A coating slurry was prepared: Composite particles, a binder, organic particles, and first inorganic particles are mixed in an appropriate amount of solvent deionized water to obtain a coating slurry with a solid content of 12% (by weight).

(3) The coating slurry prepared in step (2) was applied onto two surfaces of the PE substrate with a coater and then was dried, where the number of lines of the gravure roller for the coater was 125LPI, a speed of the coating was 50m/min, a linear speed ratio of the coating was 1.15, a drying temperature was 50°C, and a drying time was 25s.

All materials used in the examples can be obtained commercially. For example,

The above composite particles were prepared by performing the following steps:

a. Required monomers with weight percentages of 2-hydroxyethyl acrylate 19wt%, n-butyl acrylate 27wt%, methyl methacrylate 8wt%, trimethylolpropane triacrylate 1wt%, acrylonitrile 20wt%, and acrylamide 25wt% were stirred and mixed evenly at a room temperature to obtain mixed monomers;

b. 2kg of mixed monomers, 60g of sodium lauryl sulfate emulsifier, 20g of ammonium persulfate initiator, and 2.40kg of deionized water were added into a 10L four-necked flask equipped with a mechanical stirring means, a thermometer and a condenser tube, and were stirred and emulsified at a rotation speed of 1600rpm for 30 minutes; the temperature was raised to 75°C under the protection of nitrogen, and after 4 hours of reaction, a NaOH aqueous solution with a concentration of 1wt% was used to adjust the pH to 6.5 and was then immediately cooled down to below 40°C to obtain the material, that is, to obtain the organic polymer in the emulsion state, with solid content of about 45wt%; and

c. the above organic polymer of dry weight and silicon oxide were added into an appropriate amount of deionized water at the mass ratio of 9:1 and stirred for 1 hour to be fully mixed, and then the solvent was removed through spray drying to obtain powder, followed by grinding and pulverization, to obtain composite particles with $D_v50$ of 5$\mu$m.

All materials used in the examples can be obtained commercially. For example,

The first inorganic particles may be purchased from Anhui Estone Materials Technology Co., Ltd.;

the organic particles may be purchased from Ruyuan East Sunshine Fluororesin Co., Ltd.;
the substrate may be purchased from Shanghai Energy New Materials Technology Co., Ltd.;
the dispersant may be purchased from Changshu Wealthy Science and Technology Co., Ltd.; and

# EP 4 318 779 A1

the wetting agent may be purchased from Dow Chemical Company.

Corresponding parameters for preparation process of separators 1-66 are shown in Tables 1 to 7.

**Table 1**

| | | | Separator 1 | Separator 2 | Separator 3 | Separator 4 | Separator 5 | Separator 6 | Separator 7 | Separator 8 | Separator 9 | Separator 10 |
|---|---|---|---|---|---|---|---|---|---|---|---|---|
| Composite particles | Polyacrylate particles | Composition | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide |
| | | Proportion of component in composite particles (wt%) | 90 | 90 | 90 | 90 | 90 | 90 | 90 | 90 | 90 | 90 |
| | | $D,50$ (μm) | 5 | 5 | 5 | 5 | 5 | 5 | 5 | 5 | 5 | 5 |
| | Ion-conducting particles | Composition | Silicon oxide | Silicon oxide | Silicon oxide | Silicon oxide | Silicon oxide | Silicon oxide | Silicon oxide | Silicon oxide | Silicon oxide | Silicon oxide |
| | | Proportion of component in composite particles (wt%) | 10 | 10 | 10 | 10 | 10 | 10 | 10 | 10 | 10 | 10 |
| | | Proportion in coating (wt%) | 0.5 | 0.6 | 0.8 | 1 | 1.2 | 2 | 3 | 1 | 1 | 1 |
| | | $D,50$ of ion-conductive particles of primary particle morphology (μm) | 0.015 | 0.015 | 0.015 | 0.015 | 0.015 | 0.015 | 0.015 | 0.015 | 0.015 | 0.015 |
| Bulges | | Two-side height of bulges (μm) | 20 | 20 | 20 | 20 | 20 | 20 | 20 | 20 | 20 | 20 |
| | | Composition of organic particles | / | / | / | / | / | / | / | / | / | / |
| | | Mass ratio of composite particles to organic particles | / | / | / | / | / | / | / | / | / | / |

| | | | Separator 1 | Separator 2 | Separator 3 | Separator 4 | Separator 5 | Separator 6 | Separator 7 | Separator 8 | Separator 9 | Separator 10 |
|---|---|---|---|---|---|---|---|---|---|---|---|---|
| Binder | | Composition of binder | 30wt% styrene-15wt% methacrylic acid-10wt% acrylamide-15wt% acrylic acid-5wt% acrylonitrile-10wt% n-butyl acrylate-2wt% methacrylate-2-hydroxyethyl-1wt% E44 epoxy resin (with average epoxy value of 0.44)-12wt% polyvinyl alcohol (with alcoholysis degree of 88% and polymerization degree of 1023) copolymer | 30wt% styrene-15wt% methacrylic acid-10wt% acrylamide-15wt% acrylic acid-5wt% acrylonitrile-10wt% n-butyl acrylate-2wt% methacrylate-2-hydroxyethyl-1wt% E44 epoxy resin (with average epoxy value of 0.44)-12wt% polyvinyl alcohol (with alcoholysis degree of 88% and polymerization degree of 1023) copolymer | 30wt% styrene-15wt% methacrylic acid-10wt% acrylamide-15wt% acrylic acid-5wt% acrylonitrile-10wt% n-butyl acrylate-2wt% methacrylate-2-hydroxyethyl-1wt% E44 epoxy resin (with average epoxy value of 0.44)-12wt% polyvinyl alcohol (with alcoholysis degree of 88% and polymerization degree of 1023) copolymer | 30wt% styrene-15wt% methacrylic acid-10wt% acrylamide-15wt% acrylic acid-5wt% acrylonitrile-10wt% n-butyl acrylate-2wt% methacrylate-2-hydroxyethyl-1wt% E44 epoxy resin (with average epoxy value of 0.44)-12wt% polyvinyl alcohol (with alcoholysis degree of 88% and polymerization degree of 1023) copolymer | 30wt% styrene-15wt% methacrylic acid-10wt% acrylamide-15wt% acrylic acid-5wt% acrylonitrile-10wt% n-butyl acrylate-2wt% methacrylate-2-hydroxyethyl-1wt% E44 epoxy resin (with average epoxy value of 0.44)-12wt% polyvinyl alcohol (with alcoholysis degree of 88% and polymerization degree of 1023) copolymer | 30wt% styrene-15wt% methacrylic acid-10wt% acrylamide-15wt% acrylic acid-5wt% acrylonitrile-10wt% n-butyl acrylate-2wt% methacrylate-2-hydroxyethyl-1wt% E44 epoxy resin (with average epoxy value of 0.44)-12wt% polyvinyl alcohol (with alcoholysis degree of 88% and polymerization degree of 1023) copolymer | 30wt% styrene-15wt% methacrylic acid-10wt% acrylamide-15wt% acrylic acid-5wt% acrylonitrile-10wt% n-butyl acrylate-2wt% methacrylate-2-hydroxyethyl-1wt% E44 epoxy resin (with average epoxy value of 0.44)-12wt% polyvinyl alcohol (with alcoholysis degree of 88% and polymerization degree of 1023) copolymer | 30wt% styrene-15wt% methacrylic acid-10wt% acrylamide-15wt% acrylic acid-5wt% acrylonitrile-10wt% n-butyl acrylate-2wt% methacrylate-2-hydroxyethyl-1wt% E44 epoxy resin (with average epoxy value of 0.44)-12wt% polyvinyl alcohol (with alcoholysis degree of 88% and polymerization degree of 1023) copolymer | 30wt% styrene-15wt% methacrylic acid-10wt% acrylamide-15wt% acrylic acid-5wt% acrylonitrile-10wt% n-butyl acrylate-2wt% methacrylate-2-hydroxyethyl-1wt% E44 epoxy resin (with average epoxy value of 0.44)-12wt% polyvinyl alcohol (with alcoholysis degree of 88% and polymerization degree of 1023) copolymer | 30wt% styrene-15wt% methacrylic acid-10wt% acrylamide-15wt% acrylic acid-5wt% acrylonitrile-10wt% n-butyl acrylate-2wt% methacrylate-2-hydroxyethyl-1wt% E44 epoxy resin (with average epoxy value of 0.44)-12wt% polyvinyl alcohol (with alcoholysis degree of 88% and polymerization degree of 1023) copolymer |
| | | Mass ratio of composite particles and binder | 85:10 | 85:10 | 85:10 | 85:10 | 85:10 | 85:10 | 85:10 | 85:10 | 85:10 | 85:10 |
| First inorganic particles | | Composition | Aluminum oxide | Aluminum oxide | Aluminum oxide | Aluminum oxide | Aluminum oxide | Aluminum oxide | Aluminum oxide | Aluminum oxide | Aluminum oxide | Aluminum oxide |
| | | Proportion in coating (wt%) | 60 | 60 | 60 | 60 | 60 | 60 | 60 | 50 | 55 | 65 |
| | | $D,50$ (μm) | 2 | 2 | 2 | 2 | 2 | 2 | 2 | 2 | 2 | 2 |
| | | Mass ratio of first inorganic particles to ion-conducting particles | 120 | 100 | 75 | 60 | 50 | 30 | 20 | 50 | 55 | 65 |

**Table 2**

| | | | | Separator 11 | Separator 12 | Separator 13 | Separator 14 | Separator 15 | Separator 16 | Separator 17 | Separator 18 | Separator 19 | Separator 20 |
|---|---|---|---|---|---|---|---|---|---|---|---|---|---|
| Composite particles | Polyacrylate particles | Composition | | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide |
| | | Proportion of component in composite particles (wt%) | | 90 | 90 | 90 | 90 | 90 | 90 | 90 | 90 | 90 | 90 |
| | | $D_v50$ (μm) | | 5 | 5 | 5 | 5 | 5 | 5 | 5 | 5 | 5 | 5 |
| | Ion-conducting particles | Composition | | Silicon oxide | Silicon oxide | Silicon oxide | Silicon oxide | Silicon oxide | Silicon oxide | Silicon oxide | Silicon oxide | Silicon oxide | Silicon oxide |
| | | Proportion of component in composite particles (wt%) | | 10 | 10 | 10 | 10 | 10 | 10 | 10 | 10 | 10 | 10 |
| | | Proportion in coating (wt%) | | 1 | 0.5 | 0.5 | 0.5 | 0.5 | 3 | 3 | 3 | 3 | 1 |
| | | $D_v50$ of ion-conductive particles of primary particle morphology (μm) | | 0.015 | 0.015 | 0.015 | 0.015 | 0.015 | 0.015 | 0.015 | 0.015 | 0.015 | 0.015 |
| Bulges | | Two-side height of bulges (μm) | | 20 | 20 | 20 | 20 | 20 | 20 | 20 | 20 | 20 | 20 |
| | | Composition of organic particles | | / | / | / | / | / | / | / | / | / | / |
| | | Mass ratio of composite particles to organic particles | | / | / | / | / | / | / | / | / | / | / |

| | | | Separator 11 | Separator 12 | Separator 13 | Separator 14 | Separator 15 | Separator 16 | Separator 17 | Separator 18 | Separator 19 | Separator 20 |
|---|---|---|---|---|---|---|---|---|---|---|---|---|
| Binder | Composition of binder | | 30wt% styrene-15wt% methacrylic acid-10wt% acrylamide-15wt% acrylic acid-5wt% acrylonitrile-10wt% n-butyl acrylate-2wt% methacrylate-2-hydroxyethyl-1wt% E44 epoxy resin (with average epoxy value of 0.44)-12wt% polyvinyl alcohol (with alcoholysis degree of 88% and polymerization degree of 1023) copolymer | 30wt% styrene-15wt% methacrylic acid-10wt% acrylamide-15wt% acrylic acid-5wt% acrylonitrile-10wt% n-butyl acrylate-2wt% methacrylate-2-hydroxyethyl-1wt% E44 epoxy resin (with average epoxy value of 0.44)-12wt% polyvinyl alcohol (with alcoholysis degree of 88% and polymerization degree of 1023) copolymer | 30wt% styrene-15wt% methacrylic acid-10wt% acrylamide-15wt% acrylic acid-5wt% acrylonitrile-10wt% n-butyl acrylate-2wt% methacrylate-2-hydroxyethyl-1wt% E44 epoxy resin (with average epoxy value of 0.44)-12wt% polyvinyl alcohol (with alcoholysis degree of 88% and polymerization degree of 1023) copolymer | 30wt% styrene-15wt% methacrylic acid-10wt% acrylamide-15wt% acrylic acid-5wt% acrylonitrile-10wt% n-butyl acrylate-2wt% methacrylate-2-hydroxyethyl-1wt% E44 epoxy resin (with average epoxy value of 0.44)-12wt% polyvinyl alcohol (with alcoholysis degree of 88% and polymerization degree of 1023) copolymer | 30wt% styrene-15wt% methacrylic acid-10wt% acrylamide-15wt% acrylic acid-5wt% acrylonitrile-10wt% n-butyl acrylate-2wt% methacrylate-2-hydroxyethyl-1wt% E44 epoxy resin (with average epoxy value of 0.44)-12wt% polyvinyl alcohol (with alcoholysis degree of 88% and polymerization degree of 1023) copolymer | 30wt% styrene-15wt% methacrylic acid-10wt% acrylamide-15wt% acrylic acid-5wt% acrylonitrile-10wt% n-butyl acrylate-2wt% methacrylate-2-hydroxyethyl-1wt% E44 epoxy resin (with average epoxy value of 0.44)-12wt% polyvinyl alcohol (with alcoholysis degree of 88% and polymerization degree of 1023) copolymer | 30wt% styrene-15wt% methacrylic acid-10wt% acrylamide-15wt% acrylic acid-5wt% acrylonitrile-10wt% n-butyl acrylate-2wt% methacrylate-2-hydroxyethyl-1wt% E44 epoxy resin (with average epoxy value of 0.44)-12wt% polyvinyl alcohol (with alcoholysis degree of 88% and polymerization degree of 1023) copolymer | 30wt% styrene-15wt% methacrylic acid-10wt% acrylamide-15wt% acrylic acid-5wt% acrylonitrile-10wt% n-butyl acrylate-2wt% methacrylate-2-hydroxyethyl-1wt% E44 epoxy resin (with average epoxy value of 0.44)-12wt% polyvinyl alcohol (with alcoholysis degree of 88% and polymerization degree of 1023) copolymer | 30wt% styrene-15wt% methacrylic acid-10wt% acrylamide-15wt% acrylic acid-5wt% acrylonitrile-10wt% n-butyl acrylate-2wt% methacrylate-2-hydroxyethyl-1wt% E44 epoxy resin (with average epoxy value of 0.44)-12wt% polyvinyl alcohol (with alcoholysis degree of 88% and polymerization degree of 1023) copolymer | 30wt% styrene-15wt% methacrylic acid-10wt% acrylamide-15wt% acrylic acid-5wt% acrylonitrile-10wt% n-butyl acrylate-2wt% methacrylate-2-hydroxyethyl-1wt% E44 epoxy resin (with average epoxy value of 0.44)-12wt% polyvinyl alcohol (with alcoholysis degree of 88% and polymerization degree of 1023) copolymer |
| | Mass ratio of composite particles and binder | | 85:10 | 85:10 | 85:10 | 85:10 | 85:10 | 85:10 | 85:10 | 85:10 | 85:10 | 85:10 |
| First inorganic particles | Composition | | Aluminum oxide | Aluminum oxide | Aluminum oxide | Aluminum oxide | Aluminum oxide | Aluminum oxide | Aluminum oxide | Aluminum oxide | Aluminum oxide | Aluminum oxide |
| | Proportion in coating (wt%) | | 70 | 50 | 55 | 65 | 70 | 50 | 55 | 65 | 70 | 60 |
| | $D_v50$ (μm) | | 2 | 2 | 2 | 2 | 2 | 2 | 2 | 2 | 2 | 2 |
| | Mass ratio of first inorganic particles to ion-conducting particles | | 70 | 100 | 110 | 130 | 140 | 17 | 18 | 22 | 23 | 60 |

**Table 3**

| | | | Separator 21 | Separator 22 | Separator 23 | Separator 24 | Separator 25 | Separator 26 | Separator 27 | Separator 28 | Separator 29 | Separator 30 |
|---|---|---|---|---|---|---|---|---|---|---|---|---|
| Composite particles | Polyacrylate particles | Composition | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide |
| | | Proportion of component in composite particles (wt%) | 99.9 | 99 | 98 | 92 | 85 | 75 | 60 | 50 | 45 | 90 |
| | | $D_v50$ (μm) | 5 | 5 | 5 | 5 | 5 | 5 | 5 | 5 | 5 | 1.5 |
| | Ion-conducting particles | Composition | Silicon oxide | Silicon oxide | Silicon oxide | Silicon oxide | Silicon oxide | Silicon oxide | Silicon oxide | Silicon oxide | Silicon oxide | Silicon oxide |
| | | Proportion of component in composite particles (wt%) | 0.1 | 1 | 2 | 8 | 15 | 25 | 40 | 50 | 55 | 10 |
| | | Proportion in coating (wt%) | 1 | 1 | 1 | 1 | 1 | 1 | 1 | 1 | 1 | 1 |
| | | $D_v50$ of ion-conductive particles of primary particle morphology (μm) | 0.015 | 0.015 | 0.015 | 0.015 | 0.015 | 0.015 | 0.015 | 0.015 | 0.015 | 0.015 |
| Bulges | | Two-side height of bulges (μm) | 20 | 20 | 20 | 20 | 20 | 20 | 20 | 20 | 20 | 20 |
| | | Composition of organic particles | / | / | / | / | / | / | / | / | / | / |
| | | Mass ratio of composite particles to organic particles | / | / | / | / | / | / | / | / | / | / |

| | | | Separator 21 | Separator 22 | Separator 23 | Separator 24 | Separator 25 | Separator 26 | Separator 27 | Separator 28 | Separator 29 | Separator 30 |
|---|---|---|---|---|---|---|---|---|---|---|---|---|
| Binder | | Composition of binder | 30wt% styrene-15wt% methacrylic acid-10wt% acrylamide-15wt% acrylic acid-5wt% acrylonitrile-10wt% n-butyl acrylate-2wt% methacrylate-2-hydroxyethyl-1wt% E44 epoxy resin (with average epoxy value of 0.44)-12wt% polyvinyl alcohol (with alcoholysis degree of 88% and polymerization degree of 1023) copolymer | 30wt% styrene-15wt% methacrylic acid-10wt% acrylamide-15wt% acrylic acid-5wt% acrylonitrile-10wt% n-butyl acrylate-2wt% methacrylate-2-hydroxyethyl-1wt% E44 epoxy resin (with average epoxy value of 0.44)-12wt% polyvinyl alcohol (with alcoholysis degree of 88% and polymerization degree of 1023) copolymer | 30wt% styrene-15wt% methacrylic acid-10wt% acrylamide-15wt% acrylic acid-5wt% acrylonitrile-10wt% n-butyl acrylate-2wt% methacrylate-2-hydroxyethyl-1wt% E44 epoxy resin (with average epoxy value of 0.44)-12wt% polyvinyl alcohol (with alcoholysis degree of 88% and polymerization degree of 1023) copolymer | 30wt% styrene-15wt% methacrylic acid-10wt% acrylamide-15wt% acrylic acid-5wt% acrylonitrile-10wt% n-butyl acrylate-2wt% methacrylate-2-hydroxyethyl-1wt% E44 epoxy resin (with average epoxy value of 0.44)-12wt% polyvinyl alcohol (with alcoholysis degree of 88% and polymerization degree of 1023) copolymer | 30wt% styrene-15wt% methacrylic acid-10wt% acrylamide-15wt% acrylic acid-5wt% acrylonitrile-10wt% n-butyl acrylate-2wt% methacrylate-2-hydroxyethyl-1wt% E44 epoxy resin (with average epoxy value of 0.44)-12wt% polyvinyl alcohol (with alcoholysis degree of 88% and polymerization degree of 1023) copolymer | 30wt% styrene-15wt% methacrylic acid-10wt% acrylamide-15wt% acrylic acid-5wt% acrylonitrile-10wt% n-butyl acrylate-2wt% methacrylate-2-hydroxyethyl-1wt% E44 epoxy resin (with average epoxy value of 0.44)-12wt% polyvinyl alcohol (with alcoholysis degree of 88% and polymerization degree of 1023) copolymer | 30wt% styrene-15wt% methacrylic acid-10wt% acrylamide-15wt% acrylic acid-5wt% acrylonitrile-10wt% n-butyl acrylate-2wt% methacrylate-2-hydroxyethyl-1wt% E44 epoxy resin (with average epoxy value of 0.44)-12wt% polyvinyl alcohol (with alcoholysis degree of 88% and polymerization degree of 1023) copolymer | 30wt% styrene-15wt% methacrylic acid-10wt% acrylamide-15wt% acrylic acid-5wt% acrylonitrile-10wt% n-butyl acrylate-2wt% methacrylate-2-hydroxyethyl-1wt% E44 epoxy resin (with average epoxy value of 0.44)-12wt% polyvinyl alcohol (with alcoholysis degree of 88% and polymerization degree of 1023) copolymer | 30wt% styrene-15wt% methacrylic acid-10wt% acrylamide-15wt% acrylic acid-5wt% acrylonitrile-10wt% n-butyl acrylate-2wt% methacrylate-2-hydroxyethyl-1wt% E44 epoxy resin (with average epoxy value of 0.44)-12wt% polyvinyl alcohol (with alcoholysis degree of 88% and polymerization degree of 1023) copolymer | 30wt% styrene-15wt% methacrylic acid-10wt% acrylamide-15wt% acrylic acid-5wt% acrylonitrile-10wt% n-butyl acrylate-2wt% methacrylate-2-hydroxyethyl-1wt% E44 epoxy resin (with average epoxy value of 0.44)-12wt% polyvinyl alcohol (with alcoholysis degree of 88% and polymerization degree of 1023) copolymer |
| | | Mass ratio of composite particles and binder | 85:10 | 85:10 | 85:10 | 85:10 | 85:10 | 85:10 | 85:10 | 85:10 | 85:10 | 85:10 |
| First inorganic particles | | Composition | Aluminum oxide | Aluminum oxide | Aluminum oxide | Aluminum oxide | Aluminum oxide | Aluminum oxide | Aluminum oxide | Aluminum oxide | Aluminum oxide | Aluminum oxide |
| | | Proportion in coating (wt%) | 60 | 60 | 60 | 60 | 60 | 60 | 60 | 60 | 60 | 60 |
| | | $D_v50$ (μm) | 2 | 2 | 2 | 2 | 2 | 2 | 2 | 2 | 2 | 2 |
| | | Mass ratio of first inorganic particles to ion-conducting particles | 60 | 60 | 60 | 60 | 60 | 60 | 60 | 60 | 60 | 60 |

# EP 4 318 779 A1

**Table 4**

| | | | Separator 31 | Separator 32 | Separator 33 | Separator 34 | Separator 35 | Separator 36 | Separator 37 | Separator 38 | Separator 39 | Separator 40 |
|---|---|---|---|---|---|---|---|---|---|---|---|---|---|
| Composite particles | Polyacrylate particles | Composition | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide |
| | | Proportion of component in composite particles (wt%) | 90 | 90 | 90 | 90 | 90 | 90 | 90 | 90 | 90 | 90 |
| | | $D,50$ (μm) | 2.5 | 3 | 4 | 6 | 8 | 10 | 5 | 5 | 5 | 5 |
| | Ion-conducting particles | Composition | Silicon oxide | Silicon oxide | Silicon oxide | Silicon oxide | Silicon oxide | Silicon oxide | Silicon oxide | Silicon oxide | Silicon oxide | Silicon oxide |
| | | Proportion of component in composite particles (wt%) | 10 | 10 | 10 | 10 | 10 | 10 | 10 | 10 | 10 | 10 |
| | | Proportion in coating (wt%) | 1 | 1 | 1 | 1 | 1 | 1 | 1 | 1 | 1 | 1 |
| | | $D,50$ of ion-conductive particles of primary particle morphology (μm) | 0.015 | 0.015 | 0.015 | 0.015 | 0.015 | 0.015 | 0.015 | 0.015 | 0.015 | 0.015 |
| Bulges | Two-side height of bulges (μm) | | 20 | 20 | 20 | 20 | 20 | 20 | 15 | 25 | 30 | 40 |
| | Composition of organic particles | | / | / | / | / | / | / | / | / | / | / |
| | Mass ratio of composite particles to organic particles | | / | / | / | / | / | / | / | / | / | / |
| Binder | Composition of binder | | 30wt% styrene-15wt% methacrylic acid-10wt% acrylamide-15wt% acrylic acid-5wt% acrylonitrile-10wt% n-butyl acrylate-2wt% methacrylate-2-hydroxyethyl-1wt% E44 epoxy resin (with average epoxy value of 0.44)-12wt% polyvinyl alcohol (with alcoholysis degree of 88% and polymerization degree of 1023) copolymer | 30wt% styrene-15wt% methacrylic acid-10wt% acrylamide-15wt% acrylic acid-5wt% acrylonitrile-10wt% n-butyl acrylate-2wt% methacrylate-2-hydroxyethyl-1wt% E44 epoxy resin (with average epoxy value of 0.44)-12wt% polyvinyl alcohol (with alcoholysis degree of 88% and polymerization degree of 1023) copolymer | 30wt% styrene-15wt% methacrylic acid-10wt% acrylamide-15wt% acrylic acid-5wt% acrylonitrile-10wt% n-butyl acrylate-2wt% methacrylate-2-hydroxyethyl-1wt% E44 epoxy resin (with average epoxy value of 0.44)-12wt% polyvinyl alcohol (with alcoholysis degree of 88% and polymerization degree of 1023) copolymer | 30wt% styrene-15wt% methacrylic acid-10wt% acrylamide-15wt% acrylic acid-5wt% acrylonitrile-10wt% n-butyl acrylate-2wt% methacrylate-2-hydroxyethyl-1wt% E44 epoxy resin (with average epoxy value of 0.44)-12wt% polyvinyl alcohol (with alcoholysis degree of 88% and polymerization degree of 1023) copolymer | 30wt% styrene-15wt% methacrylic acid-10wt% acrylamide-15wt% acrylic acid-5wt% acrylonitrile-10wt% n-butyl acrylate-2wt% methacrylate-2-hydroxyethyl-1wt% E44 epoxy resin (with average epoxy value of 0.44)-12wt% polyvinyl alcohol (with alcoholysis degree of 88% and polymerization degree of 1023) copolymer | 30wt% styrene-15wt% methacrylic acid-10wt% acrylamide-15wt% acrylic acid-5wt% acrylonitrile-10wt% n-butyl acrylate-2wt% methacrylate-2-hydroxyethyl-1wt% E44 epoxy resin (with average epoxy value of 0.44)-12wt% polyvinyl alcohol (with alcoholysis degree of 88% and polymerization degree of 1023) copolymer | 30wt% styrene-15wt% methacrylic acid-10wt% acrylamide-15wt% acrylic acid-5wt% acrylonitrile-10wt% n-butyl acrylate-2wt% methacrylate-2-hydroxyethyl-1wt% E44 epoxy resin (with average epoxy value of 0.44)-12wt% polyvinyl alcohol (with alcoholysis degree of 88% and polymerization degree of 1023) copolymer | 30wt% styrene-15wt% methacrylic acid-10wt% acrylamide-15wt% acrylic acid-5wt% acrylonitrile-10wt% n-butyl acrylate-2wt% methacrylate-2-hydroxyethyl-1wt% E44 epoxy resin (with average epoxy value of 0.44)-12wt% polyvinyl alcohol (with alcoholysis degree of 88% and polymerization degree of 1023) copolymer | 30wt% styrene-15wt% methacrylic acid-10wt% acrylamide-15wt% acrylic acid-5wt% acrylonitrile-10wt% n-butyl acrylate-2wt% methacrylate-2-hydroxyethyl-1wt% E44 epoxy resin (with average epoxy value of 0.44)-12wt% polyvinyl alcohol (with alcoholysis degree of 88% and polymerization degree of 1023) copolymer | 30wt% styrene-15wt% methacrylic acid-10wt% acrylamide-15wt% acrylic acid-5wt% acrylonitrile-10wt% n-butyl acrylate-2wt% methacrylate-2-hydroxyethyl-1wt% E44 epoxy resin (with average epoxy value of 0.44)-12wt% polyvinyl alcohol (with alcoholysis degree of 88% and polymerization degree of 1023) copolymer |
| | Mass ratio of composite particles and binder | | 85:10 | 85:10 | 85:10 | 85:10 | 85:10 | 85:10 | 85:10 | 85:10 | 85:10 | 85:10 |
| First inorganic particles | Composition | | Aluminum oxide | Aluminum oxide | Aluminum oxide | Aluminum oxide | Aluminum oxide | Aluminum oxide | Aluminum oxide | Aluminum oxide | Aluminum oxide | Aluminum oxide |
| | Proportion in coating (wt%) | | 60 | 60 | 60 | 60 | 60 | 60 | 50 | 50 | 50 | 50 |
| | $D,50$ (μm) | | 2 | 2 | 2 | 2 | 2 | 2 | 2 | 2 | 2 | 2 |
| | Mass ratio of first inorganic particles to ion-conducting particles | | 60 | 60 | 60 | 60 | 60 | 60 | 50 | 50 | 50 | 50 |

# Table 5

| | | | Separator 41 | Separator 42 | Separator 43 | Separator 44 | Separator 45 | Separator 46 | Separator 47 | Separator 48 | Separator 49 | Separator 50 |
|---|---|---|---|---|---|---|---|---|---|---|---|---|
| Composite particles | Polyacrylate particles | Composition | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide |
| | | Proportion of component in composite particles (wt%) | 90 | 90 | 90 | 90 | 90 | 90 | 90 | 90 | 90 | 90 |
| | | $D_v50$ (μm) | 5 | 5 | 5 | 5 | 5 | 5 | 5 | 5 | 5 | 5 |
| | Ion-conducting particles | Composition | Silicon oxide | Silicon oxide | Silicon oxide | Silicon oxide | Silicon oxide | Silicon oxide | Silicon oxide | Silicon oxide | Silicon oxide | Silicon oxide |
| | | Proportion of component in composite particles (wt%) | 10 | 10 | 10 | 10 | 10 | 10 | 10 | 10 | 10 | 10 |
| | | Proportion in coating (wt%) | 1 | 1 | 1 | 1 | 1 | 1 | 1 | 1 | 1 | 1 |
| | | $D_v50$ of ion-conductive particles of primary particle morphology (μm) | 0.015 | 0.015 | 0.015 | 0.015 | 0.015 | 0.015 | 0.015 | 0.015 | 0.015 | 0.015 |

| | | | Separator 41 | Separator 42 | Separator 43 | Separator 44 | Separator 45 | Separator 46 | Separator 47 | Separator 48 | Separator 49 | Separator 50 |
|---|---|---|---|---|---|---|---|---|---|---|---|---|
| Bulges | | Two-side height of bulges (μm) | 60 | 20 | 20 | 20 | 20 | 20 | 20 | 20 | 20 | 20 |
| | | Composition of organic particles | / | polyvinyl fluoride | polyvinyl fluoride | polyvinyl fluoride | polyvinyl fluoride | polyvinyl fluoride | polyvinyl fluoride | / | / | / |
| | | Mass ratio of composite particles to organic particles | / | 75:25 | 60:40 | 50:50 | 40:60 | 30:70 | 90:10 | / | / | / |
| Binder | | Composition of binder | 30wt% styrene-15wt% methacrylic acid-10wt% acrylamide-15wt% acrylic acid-5wt% acrylonitrile-10wt% n-butyl acrylate-2wt% methacrylate-2-hydroxyethyl-1wt% E44 epoxy resin (with average epoxy value of 0.44)-12wt% polyvinyl alcohol (with alcoholysis degree of 88% and polymerization degree of 1023) copolymer | 30wt% styrene-15wt% methacrylic acid-10wt% acrylamide-15wt% acrylic acid-5wt% acrylonitrile-10wt% n-butyl acrylate-2wt% methacrylate-2-hydroxyethyl-1wt% E44 epoxy resin (with average epoxy value of 0.44)-12wt% polyvinyl alcohol (with alcoholysis degree of 88% and polymerization degree of 1023) copolymer | 30wt% styrene-15wt% methacrylic acid-10wt% acrylamide-15wt% acrylic acid-5wt% acrylonitrile-10wt% n-butyl acrylate-2wt% methacrylate-2-hydroxyethyl-1wt% E44 epoxy resin (with average epoxy value of 0.44)-12wt% polyvinyl alcohol (with alcoholysis degree of 88% and polymerization degree of 1023) copolymer | 30wt% styrene-15wt% methacrylic acid-10wt% acrylamide-15wt% acrylic acid-5wt% acrylonitrile-10wt% n-butyl acrylate-2wt% methacrylate-2-hydroxyethyl-1wt% E44 epoxy resin (with average epoxy value of 0.44)-12wt% polyvinyl alcohol (with alcoholysis degree of 88% and polymerization degree of 1023) copolymer | 30wt% styrene-15wt% methacrylic acid-10wt% acrylamide-15wt% acrylic acid-5wt% acrylonitrile-10wt% n-butyl acrylate-2wt% methacrylate-2-hydroxyethyl-1wt% E44 epoxy resin (with average epoxy value of 0.44)-12wt% polyvinyl alcohol (with alcoholysis degree of 88% and polymerization degree of 1023) copolymer | 30wt% styrene-15wt% methacrylic acid-10wt% acrylamide-15wt% acrylic acid-5wt% acrylonitrile-10wt% n-butyl acrylate-2wt% methacrylate-2-hydroxyethyl-1wt% E44 epoxy resin (with average epoxy value of 0.44)-12wt% polyvinyl alcohol (with alcoholysis degree of 88% and polymerization degree of 1023) copolymer | 30wt% styrene-15wt% methacrylic acid-10wt% acrylamide-15wt% acrylic acid-5wt% acrylonitrile-10wt% n-butyl acrylate-2wt% methacrylate-2-hydroxyethyl-1wt% E44 epoxy resin (with average epoxy value of 0.44)-12wt% polyvinyl alcohol (with alcoholysis degree of 88% and polymerization degree of 1023) copolymer | 30wt% styrene-15wt% methacrylic acid-10wt% acrylamide-15wt% acrylic acid-5wt% acrylonitrile-10wt% n-butyl acrylate-2wt% methacrylate-2-hydroxyethyl-1wt% E44 epoxy resin (with average epoxy value of 0.44)-12wt% polyvinyl alcohol (with alcoholysis degree of 88% and polymerization degree of 1023) copolymer | 30wt% styrene-15wt% methacrylic acid-10wt% acrylamide-15wt% acrylic acid-5wt% acrylonitrile-10wt% n-butyl acrylate-2wt% methacrylate-2-hydroxyethyl-1wt% E44 epoxy resin (with average epoxy value of 0.44)-12wt% polyvinyl alcohol (with alcoholysis degree of 88% and polymerization degree of 1023) copolymer | 30wt% styrene-15wt% methacrylic acid-10wt% acrylamide-15wt% acrylic acid-5wt% acrylonitrile-10wt% n-butyl acrylate-2wt% methacrylate-2-hydroxyethyl-1wt% E44 epoxy resin (with average epoxy value of 0.44)-12wt% polyvinyl alcohol (with alcoholysis degree of 88% and polymerization degree of 1023) copolymer |
| | | Mass ratio of composite particles and binder | 85:10 | 85:10 | 85:10 | 85:10 | 85:10 | 85:10 | 85:10 | 85:10 | 85:10 | 85:10 |
| First inorganic particles | | Composition | Aluminum oxide | Aluminum oxide | Aluminum oxide | Aluminum oxide | Aluminum oxide | Aluminum oxide | Aluminum oxide | Aluminum oxide | Aluminum oxide | Aluminum oxide |
| | | Proportion in coating (wt%) | 50 | 60 | 60 | 60 | 60 | 60 | 60 | 60 | 60 | 60 |
| | | $D_v50$ (μm) | 2 | 2 | 2 | 2 | 2 | 2 | 2 | 1.5 | 1 | 0.5 |
| | | Mass ratio of first inorganic particles to ion-conducting particles | 50 | 60 | 60 | 60 | 60 | 60 | 60 | 60 | 60 | 60 |

Table 6

| | | | Separator 51 | Separator 52 | Separator 53 | Separator 54 | Separator 55 | Separator 56 | Separator 57 | Separator 58 | Separator 59 | Separator 60 |
|---|---|---|---|---|---|---|---|---|---|---|---|---|---|
| Composite particles | Polyacrylate particles | Composition | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide |
| | | Proportion of component in composite particles (wt%) | 90 | 90 | 90 | 90 | 90 | 90 | 90 | 90 | 90 | 90 |
| | | $D_v50$ (µm) | 5 | 5 | 5 | 5 | 5 | 5 | 5 | 5 | 5 | 5 |
| | Ion-conducting particles | Composition | Silicon oxide | Silicon oxide | Silicon oxide | Silicon oxide | Silicon oxide | Silicon oxide | Silicon oxide | Silicon oxide | Silicon oxide | Silicon oxide |
| | | Proportion of component in composite particles (wt%) | 10 | 10 | 10 | 10 | 10 | 10 | 10 | 10 | 10 | 10 |
| | | Proportion in coating (wt%) | 1 | 1 | 1 | 1 | 1 | 1 | 1 | 1 | 1 | 1 |
| | | $D_v50$ of ion-conductive particles of primary particle morphology (µm) | 0.015 | 0.005 | 0.01 | 0.1 | 0.5 | 0.8 | 1 | 0.015 | 0.015 | 0.015 |
| Bulges | Two-side height of bulges (µm) | | 20 | 20 | 20 | 20 | 20 | 20 | 20 | 20 | 20 | 20 |
| | Composition of organic particles | | / | / | / | / | / | / | / | / | / | / |
| | Mass ratio of composite particles to organic particles | | / | / | / | / | / | / | / | / | / | / |

| | | Separator 51 | Separator 52 | Separator 53 | Separator 54 | Separator 55 | Separator 56 | Separator 57 | Separator 58 | Separator 59 | Separator 60 |
|---|---|---|---|---|---|---|---|---|---|---|---|---|
| Binder | Composition of binder | 30wt% styrene-15wt% methacrylic acid-10wt% acrylamide-15wt% acrylic acid-5wt% acrylonitrile-10wt% n-butyl acrylate-2wt% methacrylate-2-hydroxyethyl-1wt% E44 epoxy resin (with average epoxy value of 0.44)-12wt% polyvinyl alcohol (with alcoholysis degree of 88% and polymerization degree of 1023) copolymer | 30wt% styrene-15wt% methacrylic acid-10wt% acrylamide-15wt% acrylic acid-5wt% acrylonitrile-10wt% n-butyl acrylate-2wt% methacrylate-2-hydroxyethyl-1wt% E44 epoxy resin (with average epoxy value of 0.44)-12wt% polyvinyl alcohol (with alcoholysis degree of 88% and polymerization degree of 1023) copolymer | 30wt% styrene-15wt% methacrylic acid-10wt% acrylamide-15wt% acrylic acid-5wt% acrylonitrile-10wt% n-butyl acrylate-2wt% methacrylate-2-hydroxyethyl-1wt% E44 epoxy resin (with average epoxy value of 0.44)-12wt% polyvinyl alcohol (with alcoholysis degree of 88% and polymerization degree of 1023) copolymer | 30wt% styrene-15wt% methacrylic acid-10wt% acrylamide-15wt% acrylic acid-5wt% acrylonitrile-10wt% n-butyl acrylate-2wt% methacrylate-2-hydroxyethyl-1wt% E44 epoxy resin (with average epoxy value of 0.44)-12wt% polyvinyl alcohol (with alcoholysis degree of 88% and polymerization degree of 1023) copolymer | 30wt% styrene-15wt% methacrylic acid-10wt% acrylamide-15wt% acrylic acid-5wt% acrylonitrile-10wt% n-butyl acrylate-2wt% methacrylate-2-hydroxyethyl-1wt% E44 epoxy resin (with average epoxy value of 0.44)-12wt% polyvinyl alcohol (with alcoholysis degree of 88% and polymerization degree of 1023) copolymer | 30wt% styrene-15wt% methacrylic acid-10wt% acrylamide-15wt% acrylic acid-5wt% acrylonitrile-10wt% n-butyl acrylate-2wt% methacrylate-2-hydroxyethyl-1wt% E44 epoxy resin (with average epoxy value of 0.44)-12wt% polyvinyl alcohol (with alcoholysis degree of 88% and polymerization degree of 1023) copolymer | 30wt% styrene-15wt% methacrylic acid-10wt% acrylamide-15wt% acrylic acid-5wt% acrylonitrile-10wt% n-butyl acrylate-2wt% methacrylate-2-hydroxyethyl-1wt% E44 epoxy resin (with average epoxy value of 0.44)-12wt% polyvinyl alcohol (with alcoholysis degree of 88% and polymerization degree of 1023) copolymer | 30wt% styrene-15wt% methacrylic acid-10wt% acrylamide-15wt% acrylic acid-5wt% acrylonitrile-10wt% n-butyl acrylate-2wt% methacrylate-2-hydroxyethyl-1wt% E44 epoxy resin (with average epoxy value of 0.44)-12wt% polyvinyl alcohol (with alcoholysis degree of 88% and polymerization degree of 1023) copolymer | 30wt% styrene-15wt% methacrylic acid-10wt% acrylamide-15wt% acrylic acid-5wt% acrylonitrile-10wt% n-butyl acrylate-2wt% methacrylate-2-hydroxyethyl-1wt% E44 epoxy resin (with average epoxy value of 0.44)-12wt% polyvinyl alcohol (with alcoholysis degree of 88% and polymerization degree of 1023) copolymer | 30wt% styrene-15wt% methacrylic acid-10wt% acrylamide-15wt% acrylic acid-5wt% acrylonitrile-10wt% n-butyl acrylate-2wt% methacrylate-2-hydroxyethyl-1wt% E44 epoxy resin (with average epoxy value of 0.44)-12wt% polyvinyl alcohol (with alcoholysis degree of 88% and polymerization degree of 1023) copolymer |
| | Mass ratio of composite particles and binder | 85:10 | 85:10 | 85:10 | 85:10 | 85:10 | 85:10 | 85:10 | 80:20 | 80:5 | 80:10 |
| First inorganic particles | Composition | Aluminum oxide | Aluminum oxide | Aluminum oxide | Aluminum oxide | Aluminum oxide | Aluminum oxide | Aluminum oxide | Aluminum oxide | Aluminum oxide | |
| | Proportion in coating (wt%) | 60 | 60 | 60 | 60 | 60 | 60 | 60 | 60 | 60 | 60 |
| | $D_v50$ (µm) | 0.2 | 2 | 2 | 2 | 2 | 2 | 2 | 2 | 2 | 2 |
| | Mass ratio of first inorganic particles to ion-conducting particles | 60 | 60 | 60 | 60 | 60 | 60 | 60 | 60 | 60 | 60 |

Table 7

| | | | Separator 61 | Separator 62 | Separator 63 | Separator 64 | Separator 65 | Separator 66 |
|---|---|---|---|---|---|---|---|---|
| Polyacrylate particles | | Composition | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide | 19wt% 2-hydroxyethyl acrylate + 27wt% n-butyl acrylate + 8wt% methyl methacrylate + 1wt% trimethylolpropane triacrylate + 20wt% acrylonitrile + 25wt% acrylamide |
| | | Proportion of component in composite particles (wt%) | 90 | 90 | 90 | 90 | 90 | 90 |
| | | $D_v50$ ($\mu$m) | 5 | 5 | 5 | 5 | 5 | 5 |

EP 4 318 779 A1

25

| | | | Separator 61 | Separator 62 | Separator 63 | Separator 64 | Separator 65 | Separator 66 |
|---|---|---|---|---|---|---|---|---|
| Composite particles | Ion-conducting particles | Composition | Silicon oxide | Silicon oxide | Silicon oxide | Silicon oxide | Silicon oxide | Silicon oxide |
| | | Proportion of component in composite particles (wt%) | 10 | 10 | 10 | 10 | 10 | 10 |
| | | Proportion in coating (wt%) | 1 | 1 | 1 | 1 | 1 | 0.05 |
| | | $D_v50$ of ion-conductive particles of primary particle morphology ($\mu$m) | 0.015 | 0.015 | 0.015 | 0.015 | 0.015 | 0.015 |

(continued)

| | | Separator 61 | Separator 62 | Separator 63 | Separator 64 | Separator 65 | Separator 66 |
|---|---|---|---|---|---|---|---|
| Bulges | Two-side height of bulges ($\mu$m) | 20 | 20 | 20 | 20 | 20 | 20 |
| | Composition of organic particles | / | / | / | / | / | / |
| | Mass ratio of composite particles to organic particles | / | / | / | / | / | / |

| | | Separator 61 | Separator 62 | Separator 63 | Separator 64 | Separator 65 | Separator 66 |
|---|---|---|---|---|---|---|---|
| Binder | Composition of binder | 30wt% styrene-15wt% methacrylic acid-10wt% acrylamide-15wt% acrylic acid-5wt% acrylonitrile-10wt% n-butyl acrylate-2wt% methacrylate-2-hydroxyethyl-lwt% E44 epoxy resin (with average epoxy value of 0.44)-12wt% polyvinyl alcohol (with alcoholysis degree of 88% and polymerization degree of 1023) copolymer | 30wt% styrene-15wt% methacrylic acid-10wt% acrylamide-15wt% acrylic acid-5wt% acrylonitrile-10wt% n-butyl acrylate-2wt% methacrylate-2-hydroxyethyl-lwt% E44 epoxy resin (with average epoxy value of 0.44)-12wt% polyvinyl alcohol (with alcoholysis degree of 88% and polymerization degree of 1023) copolymer | 30wt% styrene-15wt% methacrylic acid-10wt% acrylamide-15wt% acrylic acid-5wt% acrylonitrile-10wt% n-butyl acrylate-2wt% methacrylate-2-hydroxyethyl-lwt% E44 epoxy resin (with average epoxy value of 0.44)-12wt% polyvinyl alcohol (with alcoholysis degree of 88% and polymerization degree of 1023) copolymer | 30wt% styrene-15wt% methacrylic acid-10wt% acrylamide-15wt% acrylic acid-5wt% acrylonitrile-10wt% n-butyl acrylate-2wt% methacrylate-2-hydroxyethyl-lwt% E44 epoxy resin (with average epoxy value of 0.44)-12wt% polyvinyl alcohol (with alcoholysis degree of 88% and polymerization degree of 1023) copolymer | 30wt% styrene-15wt% methacrylic acid-10wt% acrylamide-15wt% acrylic acid-5wt% acrylonitrile-10wt% n-butyl acrylate-2wt% methacrylate-2-hydroxyethyl-lwt% E44 epoxy resin (with average epoxy value of 0.44)-12wt% polyvinyl alcohol (with alcoholysis degree of 88% and polymerization degree of 1023) copolymer | 30wt% styrene-15wt% methacrylic acid-10wt% acrylamide-15wt% acrylic acid-5wt% acrylonitrile-10wt% n-butyl acrylate-2wt% methacrylate-2-hydroxyethyl-lwt% E44 epoxy resin (with average epoxy value 0.44)-12wt% polyvinyl alcohol (with alcoholysis degree of 88% and polymerization degree of 1023) copolymer |
| | Mass ratio of composite particles and binder | 83:10 | 87:10 | 90:15 | 90:8 | 90:10 | 85:10 |

EP 4 318 779 A1

(continued)

| | | Separator 61 | Separator 62 | Separator 63 | Separator 64 | Separator 65 | Separator 66 |
|---|---|---|---|---|---|---|---|
| First inorganic particles | Composition | Aluminum oxide | Aluminum oxide | Aluminum oxide | Aluminum oxide | Aluminum oxide | Aluminum oxide |
| | Proportion in coating (wt%) | 60 | 60 | 60 | 60 | 60 | 60 |
| | Dv50 ($\mu$m) | 2 | 2 | 2 | 2 | 2 | 2 |
| | Mass ratio of first inorganic particles to ion-conducting particles | 60 | 60 | 60 | 60 | 60 | 1200 |

II. Preparation of battery

Example 1

1. Preparation of positive electrode plate

A positive electrode active material $LiNi_{0.8}Co_{0.1}Mn_{0.1}O_2$ (NCM811), a conductive agent carbon black (Super P), and a binder polyvinylidene fluoride (PVDF) were evenly mixed in an appropriate amount of solvent N-formaldehyde (NMP) at a mass ratio of 96.2:2.7:1.1 to obtain a positive electrode slurry, and the positive electrode slurry was applied to a positive electrode current collector aluminum foil, followed by processes of drying, cold pressing, slitting, and cutting, to obtain a positive electrode plate. The positive electrode had a surface density of $0.207mg/mm^2$ and a compacted density of $3.5g/cm^3$.

2. Preparation of negative electrode plate

A negative electrode active material artificial graphite, a conductive agent carbon black (Super P), a binder butadiene styrene rubber (SBR), and sodium carboxymethyl cellulose (CMC-Na) were mixed well in a mass ratio of 96.4:0.7:1.8:1.1 in a proper amount of solvent deionized water to obtain a negative electrode slurry. The negative electrode slurry was applied on a negative electrode current collector copper foil, followed by processes such as drying, cold pressing, slitting, and cutting, to obtain a negative electrode plate. The negative electrode had a surface density of $0.126mg/mm^2$ and a compacted density of $1.7g/cm^3$.

3. Separator

The separator 1 prepared above was used as the separator.

4. Preparation of electrolyte

Ethylene carbonate (EC) and ethyl methyl carbonate (EMC) were mixed at a mass ratio of 30:70 to obtain an organic solvent. Fully dried electrolyte salt $LiPF_6$ was dissolved in the mixed solvent, with a concentration of the electrolyte salt being 1.0mol/L, and was then evenly mixed to obtain an electrolyte.

5. Preparation of battery

The positive electrode plate, the separator, and the negative electrode plate were sequentially stacked so that the separator was located between the positive electrode plate and the negative electrode plate to provide separation. Then, the resulting stack was wound to form an electrode assembly. The electrode assembly was placed in the outer package and the prepared electrolyte was injected into the secondary battery that was dried, followed by processes including vacuum packaging, standing, formation, and shaping, to obtain a secondary battery.

The preparation methods for secondary batteries in Examples 2 to 65 and Comparative example are similar to that of the battery in Example 1, except for different separators used. The secondary batteries in Example 2 to 65 use separators 2 to 65, and the secondary battery in Comparative example uses separator 66.

III. Evaluation of adhesion performance of the separator

The test procedure is as follows:

1. A prepared separator of 300mm long × 100mm wide and the positive and negative electrode plates prepared above were selected.

2. The upper and lower sides of the separator were wrapped with paper, and a sample of 54.2mm×72.5mm was punched out using a cutting die and a punching machine.

3. The die-cut separator sample and the positive electrode plate were stacked neatly, Teflon (teflon) of 130mm×130mm was placed on the upper and lower sides, and the stacked sample was put in the middle of a 200mm×200mm cardboard and covered with a piece of 150mm×160mm cardboard.

4. The stacked sample was placed into a flat presser, the pressure and air pressure were adjusted, with pressure of the flat press machine being set to 2750KG±10KG (with a contact area of about 54.2mm×72.5mm and an actual pressure of about 7MPa after conversion), temperature to 25°C, and time to 10s, and then pressing was performed.

5. A cutting die and a punching machine were used to cut the hot-pressed sample into small strips of 72.5mm×15mm.

6. The positive electrode plate was fastened to a steel plate with a double-sided tape on one side and was attached to a separator on the other side, and a 15mm-wide A4 paper strip was attached to the separator using a double-sided tape, completing preparation of the test sample.

7. A Gotech tensile machine was powered on, and parameters were set in turn: adhesion force test, speed of 50mm/min, and initial fixture spacing of 40mm.

8. The test sample was placed between the clamps, with an end of the steel plate fastened to the lower clamp and the A4 paper fastened to the upper clamp, and the upper and lower clamps were tightened with respective fixtures.

9. A stretching operation screen on the computer desktop was clicked, and force, displacement, and the like were set to zero. "Start" was clicked to perform a pre-stretch for about 5mm; after the pre-stretch, the force, displacement, and the like were reset to zero; then, the test was started. During the test, the steel plate for fastening the electrode plate was fastened, and the A4 paper strip was pulled upwards with the tensile machine to separate the separator from the positive electrode plate.

After the test was completed, complete data was exported and stored.

10. At least 5 test samples were measured in each group, and if curve repeatability of the adhesion force test of the 5 test samples was relatively good, testing was then performed for a next group; otherwise, the test was further performed until good repeatability was obtained for 5 test samples.

11. After the test was completed, a curve of adhesion strength (N/m)-displacement was made to take an average value of the 100th to 300th data points as the adhesion force, where the measured adhesion force was denoted as $F_1$.

12. Steps 1 to 11 were performed, except for step 4 in which the pressure was changed to 1178KG$\pm$10KG (with a contact area of about 54.2mm$\times$72.5mm and an actual pressure of about 3MPa after conversion) and the temperature T was changed to 95°C, where the measured adhesion force was denoted as $F_2$.

IV. Evaluation on ionic conductivity of the separator

The test procedure is as follows:

1. Sample punching: A piece of white paper was placed on a cutting die of 45.3mm*33.7mm; then a separator was placed and another piece of white paper was put on top of the separator; and a backing plate was placed on the top and the separator and the backing plate were placed into the flat cold presser for stamping.

2. Assembly of symmetrical battery: (1) sample preparation: (a) separator, 45.3*33.7mm$^2$ square piece; (b) pocket bag; (c) cold-pressed electrode plate of 23*35mm$^2$, with one side coated with FSNC (artificial graphite); (d) E-Black electrolyte; (2) stacking: one piece of FSNC electrode plate was laid flat on dust-free paper, 300$\mu$L electrolyte was absorbed to drip 2 drops on the center of the electrode plate, one layer of stamped separator obtained in step (1) was laid flat on the electrode plate and got wet slowly with the electrolyte; the left hand held the pocket bag and the right hand held tweezers to tear off a small corner from the lower left of a green adhesive and lift the green adhesive; the thumb of the left hand held the lifted green adhesive while keeping a copper foil level, and then the stacked electrode plate and separator were inserted between the green adhesive and the copper foil. Tweezers were used to quickly stroke downward from the top seal outside the pocket until the green adhesive got flat and smooth. Remaining electrolyte was injected slowly into the round hole. Another FSNC electrode plate was inserted between the top of the green adhesive and the copper foil of the current collector and was aligned with the electrode plate below as much as possible. Tweezers were used to quickly stroke downward from the top seal to hold a position with the electrode plates. All the above operations were done in the glove box. The symmetrical battery was made side-sealed and bottom-sealed.

3. Putting the symmetrical battery onto a fixture.

4. Test: EC-Lab software, frequency range being set to 1 MHz-I kHz, amplitude Va to 5mV, range of E to -1V-1V, Nd to 10, and Na to 3.

5. Data processing: The conductivity of the separator was obtained through calculation according to the formula $\sigma = 1/\rho = l/(k \cdot S)*10$; where $\sigma$ is the conductivity of the separator, in unit of mS/cm; $l$ is the thickness of one layer of separator, in unit of m; $S$ is a valid area of the separator in the symmetrical battery ($\Phi$14mm), in unit of m$^2$; and $k$ is the volume resistance of the electrolyte transported in one layer of separator, in unit of Ohm.

V. Battery performance test

(1) Cycling performance at 25°C

At 25°C, secondary batteries prepared in the examples and comparative example were charged to a charging cut-off voltage 4.2V at a constant current of 1C, then charged to a current of $\leq$ 0.05C at a constant voltage, and left standing for 5min; and then discharged to a discharging cut-off voltage of 2.8V at a constant current of 0.33C and left standing for Smin. A battery capacity at that time was recorded as $C_0$. According to this method, the batteries ware charged and discharged for 1500 cycles, and the battery capacity after 1500 cycles was recorded as $C_1$.

Cycling capacity retention rate of the battery at 25°C = $C_1/C_0 \times 100\%$.

(2) Cycling performance at 45°C

At 45°C, secondary batteries prepared in the Examples and Comparative example were charged to a charging cut-off voltage 4.2V at a constant current of 1C, charged to a current of ≤ 0.05C at a constant voltage, and left standing for 5min; and then discharged to a discharging cut-off voltage of 2.8V at a constant current of 0.33C and left standing for Smin. A battery capacity at that time was recorded as $C_0$. According to this method, the batteries ware charged and discharged for 1500 cycles, and the battery capacity at that time was recorded as $C_1$.

Cycling capacity retention rate of the battery at 45°C = $C_1/C_0 \times 100\%$.

(3) Hot-box test

At 25°C, secondary batteries prepared in the Examples and Comparative example were charged to a charging cut-off voltage 4.2V at a constant current of 1C, then charged to a current of ≤ 0.05C at a constant voltage, and left standing for Smin. Batteries with fixtures were tested in DHG-9070A DHG series high-temperature oven at temperature increasing from a room temperature to 80°C±2°C at a rate of 5°C/min, followed by standing for 30 minutes. Then, the temperature was raised again at a rate of 5°C/min, followed by standing for 30 minutes for every 5°C increase until the cell fails. A temperature at which the cell started to fail was recorded.

(4) Thermal spread performance test

At 25°C, secondary batteries prepared in the Examples and Comparative example were charged to a charging cut-off voltage 4.2V at a constant current of 1C, then charged to a current of ≤ 0.05C at a constant voltage, and left standing for 10min. Then, a metal heating plate was tightly attached to the surface of the battery. The battery was clamped with a fixture at the position that was not in contact with the heating plate, and a 3mm heat-insulating pad was added between the fixture and the battery. Heating was performed at a constant temperature of 200°C until thermal runaway occurred in the battery. A time at which the battery experienced thermal runaway was recorded.

Table 8 lists performance data of separators and batteries that is obtained through measurement in Examples 1-65 and Comparative example.

## Table 8

| | Ionic conductivity of separator (ms/cm) | Adhesion performance | | Cycling performance | | Safety performance | |
|---|---|---|---|---|---|---|---|
| | | Adhesion force for positive electrode plate (N/m)(25°C-7MPa-10s) | Adhesion force for positive electrode plate (N/m)(95°C-3MPa-10s) | Capacity retention rate (%) after 1500 cycles at 25°C | Capacity retention rate (%) after 1500 cycles at 45°C | Hot box failure temperature (°C) | Thermal spread time (s) |
| Example 1 | 0.4597 | 1.55 | 3.70 | 82 | 81 | 138 | 600 |
| Example 2 | 0.4983 | 1.30 | 3.20 | 83 | 82 | 139 | 601 |
| Example 3 | 0.5462 | 1.15 | 2.85 | 85 | 84 | 139 | 603 |
| Example 4 | 0.6848 | 1.00 | 2.50 | 88 | 87 | 140 | 605 |
| Example 5 | 0.5954 | 0.90 | 2.35 | 86 | 85 | 140 | 605 |
| Example 6 | 0.5321 | 0.75 | 2.15 | 84 | 84 | 141 | 607 |
| Example 7 | 0.5032 | 0.50 | 1.80 | 83 | 82 | 141 | 608 |
| Example 8 | 0.5446 | 1.10 | 2.80 | 83 | 81 | 133 | 585 |
| Example 9 | 0.6233 | 1.05 | 2.65 | 85 | 84 | 138 | 602 |
| Example 10 | 0.7012 | 0.65 | 2.00 | 87 | 85 | 143 | 615 |

| | Ionic conductivity of separator (ms/cm) | Adhesion performance | | Cycling performance | | Safety performance | |
|---|---|---|---|---|---|---|---|
| | | Adhesion force for positive electrode plate (N/m)(25°C-7MPa-10s) | Adhesion force for positive electrode plate (N/m)(95°C-3MPa-10s) | Capacity retention rate (%) after 1500 cycles at 25°C | Capacity retention rate (%) after 1500 cycles at 45°C | Hot box failure temperature (°C) | Thermal spread time (s) |
| Example 11 | 0.7191 | 0.35 | 1.65 | 84 | 83 | 147 | 640 |
| Example 12 | 0.4063 | 1.85 | 3.90 | 81 | 80 | 130 | 570 |
| Example 13 | 0.4256 | 1.70 | 3.80 | 82 | 81 | 135 | 595 |
| Example 14 | 0.4957 | 1.35 | 3.25 | 83 | 81 | 140 | 608 |
| Example 15 | 0.5198 | 0.95 | 2.40 | 83 | 83 | 145 | 635 |
| Example 16 | 0.6011 | 0.75 | 2.20 | 81 | 80 | 135 | 593 |
| Example 17 | 0.6984 | 0.60 | 1.95 | 81 | 80 | 140 | 607 |
| Example 18 | 0.7032 | 0.40 | 1.70 | 82 | 81 | 143 | 613 |
| Example 19 | 0.7129 | 0.35 | 1.60 | 83 | 82 | 147 | 638 |
| Example 20 | 0.6848 | 1.00 | 2.50 | 88 | 87 | 140 | 605 |
| Example 21 | 0.4032 | 1.95 | 4.90 | 80 | 79 | 139 | 602 |
| Example 22 | 0.5397 | 1.75 | 3.95 | 82 | 82 | 140 | 603 |
| Example 23 | 0.5539 | 1.65 | 3.80 | 87 | 85 | 139 | 603 |
| Example 24 | 0.6761 | 1.15 | 2.85 | 86 | 85 | 140 | 605 |
| Example 25 | 0.7305 | 1.00 | 2.50 | 84 | 82 | 140 | 605 |
| Example 26 | 0.7512 | 0.85 | 2.30 | 83 | 83 | 141 | 607 |
| Example 27 | 0.7604 | 0.65 | 2.00 | 82 | 80 | 141 | 608 |
| Example 28 | 0.7685 | 0.40 | 1.65 | 81 | 80 | 141 | 609 |
| Example 29 | 0.3685 | 2.00 | 5.00 | 78 | 77 | 141 | 608 |
| Example 30 | 0.7204 | 0.25 | 1.45 | 79 | 78 | 139 | 603 |
| Example 31 | 0.7112 | 0.75 | 2.25 | 83 | 81 | 139 | 603 |
| Example 32 | 0.7101 | 0.75 | 2.30 | 83 | 82 | 139 | 603 |
| Example 33 | 0.7089 | 0.80 | 2.35 | 84 | 84 | 140 | 605 |
| Example 34 | 0.6438 | 0.90 | 2.40 | 87 | 85 | 140 | 605 |
| Example 35 | 0.5321 | 0.80 | 2.25 | 85 | 83 | 138 | 598 |

| | Ionic conductivity of separator (ms/cm) | Adhesion performance | | Cycling performance | | Safety performance | |
|---|---|---|---|---|---|---|---|
| | | Adhesion force for positive electrode plate (N/m)(25°C-7MPa-10s) | Adhesion force for positive electrode plate (N/m)(95°C-3MPa-10s) | Capacity retention rate (%) after 1500 cycles at 25°C | Capacity retention rate (%) after 1500 cycles at 45°C | Hot box failure temperature (°C) | Thermal spread time (s) |
| Example 36 | 0.5076 | 0.85 | 2.30 | 85 | 84 | 138 | 603 |
| Example 37 | 0.5034 | 0.75 | 2.15 | 86 | 86 | 139 | 603 |
| Example 38 | 0.6941 | 0.90 | 2.45 | 87 | 85 | 139 | 604 |
| Example 39 | 0.7243 | 0.65 | 2.05 | 85 | 84 | 138 | 602 |
| Example 40 | 0.7156 | 0.55 | 1.85 | 82 | 81 | 138 | 600 |
| Example 41 | 0.7084 | 0.40 | 1.60 | 80 | 80 | 137 | 598 |
| Example 42 | 0.6994 | 1.15 | 2.90 | 87 | 85 | 138 | 600 |
| Example 43 | 0.7025 | 1.20 | 2.95 | 87 | 86 | 139 | 603 |
| Example 44 | 0.7001 | 1.35 | 3.20 | 86 | 85 | 139 | 602 |
| Example 45 | 0.6958 | 1.40 | 3.50 | 84 | 83 | 138 | 602 |
| Example 46 | 0.6899 | 1.40 | 3.55 | 82 | 81 | 138 | 602 |
| Example 47 | 0.6967 | 1.50 | 3.70 | 82 | 81 | 138 | 600 |
| Example 48 | 0.5964 | 0.95 | 2.40 | 87 | 86 | 141 | 610 |
| Example 49 | 0.5342 | 0.80 | 2.30 | 85 | 82 | 142 | 607 |
| Example 50 | 0.4679 | 0.85 | 2.25 | 83 | 83 | 144 | 622 |
| Example 51 | 0.4056 | 0.55 | 1.80 | 81 | 80 | 139 | 602 |
| Example 52 | 0.3916 | 2.05 | 5.10 | 78 | 79 | 139 | 602 |
| Example 53 | 0.4857 | 0.50 | 1.75 | 83 | 83 | 139 | 600 |
| Example 54 | 0.5899 | 0.70 | 2.10 | 86 | 85 | 140 | 603 |
| Example 55 | 0.6848 | 1.00 | 2.50 | 88 | 87 | 140 | 605 |
| Example 56 | 0.6556 | 0.75 | 2.25 | 87 | 85 | 139 | 600 |
| Example 57 | 0.6458 | 0.95 | 2.40 | 88 | 86 | 140 | 603 |
| Example 58 | 0.6737 | 0.90 | 2.30 | 85 | 83 | 139 | 600 |
| Example 59 | 0.7046 | 0.80 | 2.20 | 83 | 81 | 137 | 590 |
| Example 60 | 0.7305 | 0.75 | 2.20 | 82 | 82 | 135 | 585 |

| | Ionic conductivity of separator (ms/cm) | Adhesion performance | | Cycling performance | | Safety performance | |
|---|---|---|---|---|---|---|---|
| | | Adhesion force for positive electrode plate (N/m)(25°C-7MPa-10s) | Adhesion force for positive electrode plate (N/m)(95°C-3MPa-10s) | Capacity retention rate (%) after 1500 cycles at 25°C | Capacity retention rate (%) after 1500 cycles at 45°C | Hot box failure temperature (°C) | Thermal spread time (s) |
| Example 61 | 0.6564 | 1.20 | 2.80 | 85 | 83 | 143 | 615 |
| Example 62 | 0.6353 | 1.35 | 3.50 | 85 | 82 | 145 | 632 |
| Example 63 | 0.5079 | 1.65 | 3.75 | 80 | 81 | 146 | 635 |
| Example 64 | 0.5871 | 1.40 | 3.45 | 83 | 82 | 143 | 620 |
| Example 65 | 0.5468 | 1.50 | 3.60 | 80 | 82 | 145 | 630 |
| Comparative example | 0.3173 | 2.50 | 5.60 | 75 | 74 | 139 | 602 |

It can be seen from Table 8 that the ionic conductivity of the separator in Examples 1-65 is 0.4-0.8ms/cm, which is higher than 0.3173ms/cm of the separator in the Comparative example. At 25°C and 7MPa, the adhesion force of the separator to the positive electrode in Examples 1-65 is between 0.35N/m-2.05N/m, which is lower than the adhesion force of the separator to the positive electrode of 2.50N/m in the Comparative example. At 95°C and 3MPa, the adhesion force of the separator to the positive electrode in Examples 1-65 is between 1.45N/m-5.1N/m, which is lower than the adhesion force 5.6N/m of the separator to the positive electrode in the Comparative example. The capacity retention rates of the batteries after 1500 cycles at 25°C in Examples 1-65 are no less than 78%, and the capacity retention rates after 1500 cycles at 45°C is not less than 77%; the capacity retention rates after 1,500 cycles at 25°C and 45°C are obviously higher than that of the battery in the Comparative example. In addition, the hot box failure temperature in Examples 1-65 is not less than 130°C, and the thermal spread time is not less than 570s. This indicates that the separator used in this application has a higher ionic conductivity and the adhesion force of the separator to the electrode plate is appropriate, which can improve the kinetic performance and safety performance of the battery.

In conclusion, it should be noted that the foregoing embodiments are for description of the technical solutions of this application only rather than for limiting this application. Although this application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of this application. All such modifications and equivalent replacements shall fall within the scope of claims and specification of this application. In particular, as long as there is no structural conflict, the various technical features mentioned in the embodiments can be combined in any manner. This application is not limited to the specific embodiments disclosed in this specification, but includes all technical solutions falling within the scope of the claims.

**Claims**

1.   A separator, comprising:

a substrate; and
a coating, wherein the coating is formed on at least part of a surface of the substrate, the coating comprises composite particles, first inorganic particles, and a binder, the composite particles form bulges on a surface of the coating, the composite particles comprise polyacrylate particles and ion-conducting particles, and the ion-conducting particle is present between at least two of the polyacrylate particles;

wherein a mass ratio of the first inorganic particles to the ion-conducting particles is 1:0.007-0.06.

2. The separator according to claim 1, wherein based on mass of the coating, a percentage of the first inorganic particles is 50%-70%, preferably 55%-65%.

3. The separator according to claim 1 or 2, wherein based on the mass of the coating, a percentage of the ion-conducting particles is 0.5%-3%, preferably 0.6%-1.2%.

4. The separator according to any one of claims 1 to 3, wherein a dielectric constant of the ion-conducting particles is not less than 5, preferably not less than 10.

5. The separator according to any one of claims 1 to 4, wherein the ion-conducting particles comprise at least one of second inorganic particles and organic-inorganic hybrid composite particles.

6. The separator according to claim 5, wherein the second inorganic particles comprise at least one of $BaTiO_3$, $Pb(Zr,Ti)O_3(PZT)$, $Pb_{1-x}La_xZr_{1-y}Ti_yO_3(PLZT)$, $PB(Mg_3Nb_{2/3})O_3-PbTiO_3(PMN-PT)$, $HfO_2$, $SrTiO_3$, $SnO_2$, $CeO_2$, MgO, NiO, CaO, ZnO, $ZrO_2$, $Y_2O_3$, $Al_2O_3$, $TiO_2$, SiC, AlO(OH), $Al_2O_3 \cdot H_2O$, $Li_3PO_4$, $Li_xTi_y(PO_4)_3$, $\gamma$-AlOOH, $BaSO_4$, $Mg(OH)_2$, $SiO_2$, $SrTiO_3$, $BaTiO_3$, and $MgF_2$.

7. The separator according to any one of claims 1 to 6, wherein the composite particles comprise ion-conducting particles of primary particle morphology.

8. The separator according to any one of claims 1 to 7, wherein a ratio of $D_v50$ of the first inorganic particles to $D_v50$ of the ion-conducting particles of the primary particle morphology is 0.5-200:1, preferably 1-4:1.

9. The separator according to any one of claims 1 to 8, wherein $D_v50$ of the first inorganic particles is $0.5\mu m$-$2\mu m$, preferably $1\mu m$-$2\mu m$.

10. The separator according to any one of claims 1 to 9, wherein a mass ratio of the composite particles to the first inorganic particles is (5-30):(50-70).

11. The separator according to any one of claims 1 to 10, wherein $D_v50$ of the composite particles is greater than $D_v50$ of the first inorganic particles.

12. The separator according to any one of claims 1 to 11, wherein $D_v50$ of the composite particles is $\geq 2.5\mu m$, preferably $2.5\mu m$-$10\mu m$, more preferably $3\mu m$-$8\mu m$.

13. The separator according to any one of claims 1 to 12, wherein the composite particles comprise a first agglomerate, and the first agglomerate comprises at least two ion-conducting particles.

14. The separator according to claim 13, wherein $0.01\mu m \leq D_v50$ of the first agglomerate $\leq D_v10$ of the composite particles.

15. The separator according to claim 8, wherein $D_v50$ of the ion-conducting particles of the primary particle morphology is $0.01\mu m$-$1\mu m$, preferably $0.5\mu m$-$1\mu m$.

16. The separator according to any one of claims 1 to 15, wherein the composite particles comprise a second agglomerate, and the second agglomerate comprises at least two of the polyacrylate particles.

17. The separator according to claim 16, wherein $D_v50$ of the second agglomerate is $0.3\mu m$-$5\mu m$, preferably $1\mu m$-$2\mu m$.

18. The separator according to any one of claims 1 to 17, wherein the polyacrylate particles comprise polyacrylate particles of primary particle morphology and/or polyacrylate particles of secondary particle morphology.

19. The separator according to claim 18, wherein $D_v50$ of the polyacrylate particles of primary particle morphology is 50nm-400nm, preferably 100nm-200nm.

20. The separator according to claim 18, wherein $D_v50$ of the polyacrylate particles of secondary particle morphology is 2μm-15μm, preferably 5μm-8μm.

21. The separator according to any one of claims 1 to 20, wherein a percentage of the ion-conducting particles in the composite particles is 1wt%-50wt%, optionally 1wt%-40wt%, more optionally 2wt%-15wt%, most preferably 5wt%-15wt%.

22. The separator according to any one of claims 1 to 20, wherein two-side height of the bulges is 15μm-60μm.

23. The separator according to claim 13, wherein the first agglomerate is present on a surface of the bulge.

24. The separator according to any one of claims 1 to 23, wherein the binder comprises a linear copolymer with hydroxyl group and carboxylate.

25. The separator according to any one of claims 1 to 23, wherein the binder comprises a linear copolymer with hydroxyl group, carboxylate, amide group, and epoxy group.

26. The separator according to claim 24 or 25, wherein the linear copolymer comprises a polymerization product of the following types of monomers:

(1) first-type monomer, wherein the first-type monomer comprises at least one of acrylic acid, methacrylic acid, methyl methacrylate, tert-butyl methacrylate, isobomyl methacrylate, methylol acrylamide, acrylamide, styrene, and acrylonitrile;
(2) second-type monomer, wherein the second-type monomer comprises at least one of ethyl acrylate, n-butyl acrylate, isobutyl acrylate, tert-butyl acrylate, 2-ethylhexyl acrylate, n-octyl acrylate, decyl acrylate, cyclohexyl acrylate, ethyl methacrylate, n-butyl methacrylate, isobutyl methacrylate, 2-ethylhexyl methacrylate, lauryl methacrylate, n-hexyl methacrylate, tridecyl methacrylate, octadecyl methacrylate, cyclohexyl methacrylate, benzyl methacrylate, ethyleneurea ethyl methacrylate, dicyclopentene ethoxy methacrylate, tetrahydrofuryl methacrylate, trifluoroethyl methacrylate, ethylene urea ethyl methacrylate, propylene methacrylate, dicyclopentene ethoxy methacrylate, tetrahydrofuryl methacrylate, and trifluoroethyl acrylate;
(3) third-type monomer, wherein the third-type monomer comprises at least one of 2-hydroxyethyl acrylate, 2-hydroxypropyl acrylate, methacrylate-2-hydroxyethyl ester, 2-hydroxypropyl methacrylate, glycidyl acrylate, glycidyl methacrylate, dimethylaminoethyl methacrylate, diethylaminoethyl methacrylate, vinyltrimethoxysilane, vinyltriethoxysilane, vinyl Triisopropoxysilane, γ-methacryloxypropyltrimethoxysilane, N-methylolacrylamide, N-butoxymethyl(meth)acrylamide, diacetoneacrylamide, ethyl methacrylate acetoacetate, divinylbenzene, and epoxy resin with an epoxy value of 0.35-0.50; and
(4) fourth-type monomer, wherein the fourth-type monomer comprises at least one of polyvinyl alcohol, polypropylene alcohol, polypropylene glycol, polyethylene glycol, and polyvinyl acid alcohol.

27. The separator according to any one of claims 1 to 26, wherein a mass ratio of the composite particles to the binder is (80-90):(5-20), preferably (85-90):(8-15).

28. The separator according to any one of claims 1 to 27, wherein the coating further comprises organic particles, the organic particles comprise at least one of polytetrafluoroethylene particles, polychlorotrifluoroethylene particles, polyvinyl fluoride particles, polyvinylidene fluoride particles, polyethylene particles, polypropylene particles, polyacrylonitrile particles, polyethylene oxide particles, copolymer particles of fluorine-containing alkenyl monomer units and vinyl monomer units, copolymer particles of fluorine-containing alkenyl monomer units and acrylate monomer units, copolymer particles of fluorine-containing alkenyl monomer units and acrylic monomer units, and modified compound particles of the homopolymers or copolymers; and the composite particles and the organic particles form bulges on the surface of the coating.

29. The separator according to claim 28, wherein the organic particles form a third agglomerate.

30. The separator according to claim 29, wherein $D_v50$ of the third agglomerate is 5μm-30μm, preferably 5μm-12μm.

31. The separator according to claim 29 or 30, wherein the third agglomerate comprises organic particles of primary particle morphology, and a gap is present between two adjacent organic particles.

**32.** The separator according to claim 31, wherein $D_v50$ of the organic particles of primary particle morphology is 50nm-400nm, preferably 100nm-200nm.

**33.** The separator according to claim 28, wherein a mass ratio of the composite particles to the organic particles is (20-90):(0-70), preferably (45-90):(0-45).

**34.** A preparation method for the separator according to any one of claims 1 to 33, comprising:

(1) providing a substrate; and
(2) forming a coating on at least part of a surface of the substrate, wherein the coating comprises composite particles, first inorganic particles, and a binder, the composite particles form bulges on a surface of the coating, the composite particles comprise polyacrylate particles and ion-conducting particles, and the ion-conducting particle is present between at least two of the polyacrylate particles;
wherein a mass ratio of the first inorganic particles to the ion-conducting particles is 1:0.007-0.06.

**35.** A battery, comprising the separator according to any one of claims 1 to 33 or a separator prepared using the preparation method according to claim 34.

**36.** An electric apparatus, comprising the battery according to claim 35, wherein the battery is configured to supply electrical energy.

Ion-conducting particle
Composite particle (ion-conducting particle + polyacrylate particle)
First inorganic particle
Substrate
Binder

FIG. 1

Composite particle

10 μm
EHT = 3.00 kV
WD = 4.8 mm
Signal A = InLens
Mag = 500 X

FIG. 2

Corner

FIG. 3

Ion-conducting particle
Composite particle (ion-conducting particle + polyacrylate particle)
First inorganic particle
Substrate
Binder
Organic particle

FIG. 4

<u>1</u>

FIG. 5

FIG. 6

FIG. 7

FIG. 8

FIG. 9

## INTERNATIONAL SEARCH REPORT

| International application No. |
|---|
| **PCT/CN2023/080602** |

**A.  CLASSIFICATION OF SUBJECT MATTER**

H01M50/451(2021.01)i

According to International Patent Classification (IPC) or to both national classification and IPC

**B.  FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 电池, 电芯, 隔膜, 隔板, 分隔, 离子, 传导, 导通, 无机, 陶瓷, 有机, 粘结, 粘合, 凸, 突, 丙烯酸, batter+, diaphragm, seperator?, membrane?, ion, conductive, inorganic, ceramic, organic, binder?, protrud+

**C.  DOCUMENTS CONSIDERED TO BE RELEVANT**

| Category* | Citation of document, with indication, where appropriate, of the relevant passages | Relevant to claim No. |
|---|---|---|
| Y | CN 105958000 A (DONGGUAN MOFANG NEW ENERGY TECHNOLOGY CO., LTD.) 21 September 2016 (2016-09-21)<br>    description, paragraphs 5-40 | 1-36 |
| Y | CN 103441230 A (DONGGUAN AMPEREX TECHNOLOGY LTD. et al.) 11 December 2013 (2013-12-11)<br>    description, paragraphs 16-48 | 1-36 |
| Y | CN 111653717 A (DONGGUAN MOFANG NEW ENERGY TECHNOLOGY CO., LTD.) 11 September 2020 (2020-09-11)<br>    description, paragraphs 6-25 | 1-36 |
| Y | CN 110859053 A (SHENZHEN SENIOR TECHNOLOGY MATERIAL CO., LTD.) 03 March 2020 (2020-03-03)<br>    description, paragraphs 6-37 | 1-36 |
| Y | CN 105047845 A (SHENZHEN SENIOR TECHNOLOGY MATERIAL CO., LTD.) 11 November 2015 (2015-11-11)<br>    description, paragraphs 5-26 | 1-36 |

☑ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **24 May 2023** | **30 May 2023** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/080602**

### C.    DOCUMENTS CONSIDERED TO BE RELEVANT

| Category* | Citation of document, with indication, where appropriate, of the relevant passages | Relevant to claim No. |
|---|---|---|
| Y | CN 109841784 A (SK INNOVATION CO., LTD.) 04 June 2019 (2019-06-04) description, paragraphs 12-24 | 24-26 |
| A | US 2016322620 A1 (SAMSUNG SDI CO., LTD. et al.) 03 November 2016 (2016-11-03) entire document | 1-36 |

Form PCT/ISA/210 (second sheet) (July 2022)

**INTERNATIONAL SEARCH REPORT**
Information on patent family members

International application No.

**PCT/CN2023/080602**

| Patent document cited in search report | | | Publication date (day/month/year) | Patent family member(s) | | | Publication date (day/month/year) |
|---|---|---|---|---|---|---|---|
| CN | 105958000 | A | 21 September 2016 | None | | | |
| CN | 103441230 | A | 11 December 2013 | US | 2015056491 | A1 | 26 February 2015 |
| CN | 111653717 | A | 11 September 2020 | None | | | |
| CN | 110859053 | A | 03 March 2020 | WO | 2020000164 | A1 | 02 January 2020 |
| | | | | KR | 20210021585 | A | 26 February 2021 |
| | | | | JP | 2021529415 | A | 28 October 2021 |
| | | | | JP | 7217297 | B2 | 02 February 2023 |
| | | | | EP | 3817092 | A1 | 05 May 2021 |
| | | | | EP | 3817092 | A4 | 14 July 2021 |
| | | | | US | 2021265702 | A1 | 26 August 2021 |
| CN | 105047845 | A | 11 November 2015 | WO | 2016201757 | A1 | 22 December 2016 |
| CN | 109841784 | A | 04 June 2019 | US | 2019165349 | A1 | 30 May 2019 |
| | | | | US | 10756322 | B2 | 25 August 2020 |
| | | | | JP | 2019102453 | A | 24 June 2019 |
| | | | | KR | 20190062924 | A | 07 June 2019 |
| | | | | KR | 102414896 | B1 | 01 July 2022 |
| | | | | DE | 102018130080 | A1 | 29 May 2019 |
| US | 2016322620 | A1 | 03 November 2016 | KR | 20160128135 | A | 07 November 2016 |

Form PCT/ISA/210 (patent family annex) (July 2022)

**REFERENCES CITED IN THE DESCRIPTION**

**Patent documents cited in the description**

- GB 190772016 T

- GB 60402002 T